# EUROPEAN PATENT APPLICATION

(11) **EP 4 671 946 A1**
(43) Date of publication of application: **31.12.2025**
(21) Application number: 24861706.0
(22) Date of filing: 23.07.2024
(51) Int. Cl.: G06F 3/04845

(54) **DISPLAY METHOD AND APPARATUS**

(30) Priority: 06.09.2023 CN 202311149518
(71) Applicant: Honor Device Co., Ltd., Shenzhen, Guangdong 518040 (CN)
(72) Inventor: XU, Yimiao, Shenzhen, Guangdong 518040 (CN)
(74) Representative: Epping - Hermann - Fischer
(86) International application number: PCT/CN2024/107034
(87) International publication number: WO 2025/050861

(57) **Abstract**

Embodiments of this application provide a display method and apparatus, and relate to the field of terminal technologies. The method includes: displaying, by a terminal device, a second interface, the second interface including: an icon of a first material and an icon of a second material, the first material being an audio, and the second material being an image, an audio, or a video; receiving, by the terminal device, a second operation on the second interface; displaying, by the terminal device, a first icon in the second interface in response to the second operation; receiving, by the terminal device, a third operation on the first icon; and displaying, by the terminal device, a third interface in response to the third operation, the third interface including: the first material and the second material. Therefore, a user can preview images, videos, and audios in a unified manner in a first application, thereby facilitating the user to quickly locate a needed material from the first application and also facilitating the user to sort the materials in batches.

## Description

This application claims priority to Chinese Patent Application No. 202311149518.7, filed with the China National Intellectual Property Administration on September 6, 2023 and entitled "DISPLAY METHOD AND APPARATUS", which is incorporated herein by reference in its entirety.

### TECHNICAL FIELD

This application relates to the field of terminal technologies, and in particular, to a display method and apparatus.

### BACKGROUND

With the popularization and development of the Internet, people's requirements on functions of terminal devices are increasingly diversified. For example, a larger number of terminal devices may provide a video clipping function, so that a user can create a short video by editing materials such as images, videos, and audios.

During video clipping, a terminal device may acquire materials such as images, videos, and audios from different applications based on a user operation. However, since related materials are relatively scattered, the user does not know where a needed material is during material import, and thus miss important materials, affecting user experience in use of the video clipping function.

### SUMMARY

Embodiments of this application provide a display method and apparatus, so that a user can preview images, videos, and audios in a unified manner in a first application, thereby facilitating the user to quickly locate a needed material from the first application and also facilitating the user to sort the materials in batches.

According to a first aspect, an embodiment of this application provides a display method, the method including: displaying, by a terminal device, a first interface, the first interface including an icon of a first application; receiving, by the terminal device, a first operation on the icon of the first application; displaying, by the terminal device, a second interface in response to the first operation, the second interface including: an icon of a first material and an icon of a second material, the first material being an audio, and the second material being an image, an audio, or a video; receiving, by the terminal device, a second operation on the second interface; displaying, by the terminal device, a first icon in the second interface in response to the second operation; receiving, by the terminal device, a third operation on the first icon; and displaying, by the terminal device, a third interface in response to the third operation, the third interface including: the first material and the second material.

In this way, the user can preview images, videos, and audios in a unified manner in the first application, thereby facilitating the user to quickly locate a needed material from the first application and also facilitating the user to sort the materials in batches.

In a possible implementation, the third interface further includes a first control, and the method further includes: displaying, by the terminal device, a fourth interface in response to an operation on the first control, the fourth interface including a first video, the fourth interface being an interface for editing a video, and the first video being obtained by the terminal device by clipping the first material and the second material.

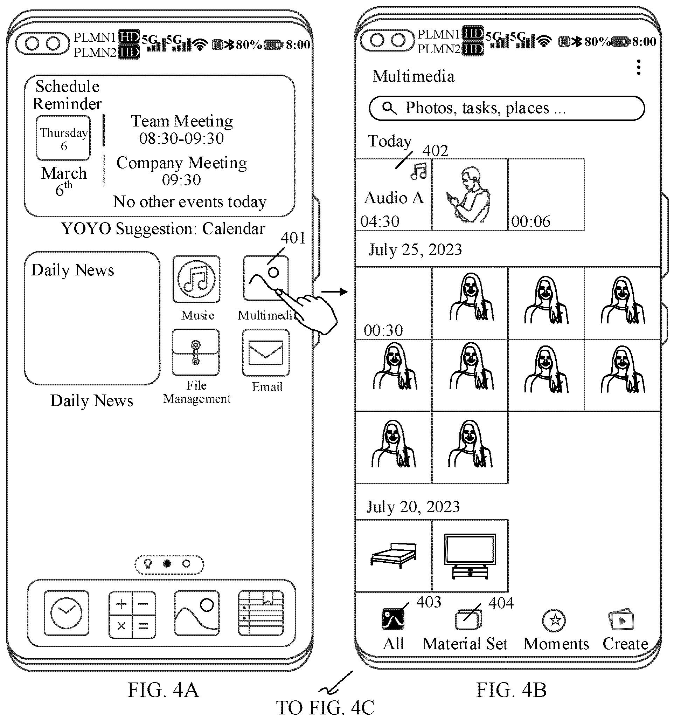

In this way, compared with that the user enters a creation function from a creation control in an interface shown in FIG. 4B and inserts a needed material into the creation function, entering the creation function by using the first control facilitates the user to create a video at any time according to a sorting status of the materials and/or a text description for a material group, thereby improving convenience and flexibility of the user in using the creation function.

In a possible implementation, the fourth interface further includes one or more of the following: a second control configured to add a material to the first video, a third control configured to export a video, a control configured to set resolution of the first video, a control configured to segment the first video, and a control configured to set a transition for the first video.

In this way, the terminal device can use a plurality of function controls in the fourth interface to edit a video in an all-round manner.

In a possible implementation, after the displaying, by the terminal device, a fourth interface, the method further includes: displaying, by the terminal device, a fifth interface in response to an operation on the second control, the fifth interface including: the first icon and an icon of a third material, the third material being an image, an audio, or a video; displaying, by the terminal device, the third material in the fourth interface in response to an operation of adding the third material to the first video; exporting, by the terminal device, a second video in response to an operation of a user on a third control, the second video including the first material, the second material, and the third material; and displaying, by the terminal device, the third material in the third interface in response to an operation of opening the third interface by the user.

It may be understood that, during creation of a video, the user may add a new available material to the video. Therefore, when detecting that the user exports the video, the terminal device may set materials in the video as a group or add a new material to an original group, facilitating the user to view material content in the video or continue to use the materials in the group to create a new video.

In a possible implementation, the third interface further includes a control configured to add descriptions, and the method further includes: displaying, by the terminal device, a text box in the third interface in response to an operation on the control configured to add descriptions; and displaying, by the terminal device, first information in the text box in response to an operation of inputting the first information in the text box, the first information including: text information, and/or a to-do item.

In this way, the user adds an idea of video creation and an editing progress of any material to the third interface at any time, so that a grouping function is more flexible and better meets a use requirement of the user.

In a possible implementation, the second interface further includes: a fourth control configured to view a material set, and the method further includes: displaying, by the terminal device, a sixth interface in response to an operation on the fourth control, the sixth interface including: a fifth control configured to view more functions; displaying, by the terminal device in response to an operation on the fifth control, a sixth control configured to detect a similar material in the sixth interface; displaying, by the terminal device, a second icon in the sixth interface in response to an operation on the sixth control; and displaying, by the terminal device, a seventh interface in response to an operation on the second icon, the seventh interface including: an icon of a third material and an icon of a fourth material, the third material and the fourth material being materials whose similarity meets a preset condition.

In this way, the terminal device can implement detection of similar materials in a multimedia application, which facilitates unified sorting of the similar materials and can also prevent occupation of more display space by the similar materials.

In a possible implementation, the method further includes: displaying, by the terminal device in response to an operation of selecting the third material and the fourth material, a seventh control configured to merge similar materials in a seventh interface; and displaying, by the terminal device, a third icon in the second interface in response to an operation on the seventh control, the third icon displaying one or more of the following: the icon of the third material, the icon of the fourth material, and a third identifier, the third identifier being used for indicating that the third icon corresponds to at least two similar materials.

The terminal device may implement detection of the similar materials in the multimedia application, and may also implement processing such as merging and deletion of the similar materials, thereby improving user experience in use of a similarity detection function and facilitating management of materials in the multimedia application.

In a possible implementation, when the seventh interface further includes: a fifth material, and the third material, the fourth material, and the fifth material are materials whose similarity meets the preset condition, after the in response to an operation on the seventh control, the method further includes: deleting, by the terminal device, the fifth material.

In this way, since a material that does not need to be merged is generally a material that the user no longer needs, the terminal device may delete the material that does not need to be merged from similar materials while merging other materials, to prevent occupation of storage space.

In a possible implementation, the method further includes: displaying, by the terminal device, an eighth interface in response to an operation on the third icon, the eighth interface including: a zoomed-out icon of the third material, a zoomed-out icon of the fourth material, and an eighth control configured to view more functions; displaying, by the terminal device, a first window in the eighth interface in response to an operation on the eighth control, the first window including one or more of the following: a ninth control configured to set a cover, and a tenth control configured to remove a similar image; and setting, by the terminal device, the icon of the third material as a cover in response to an operation on the ninth control when the icon of the third material is in a selected state, the third icon including the icon of the third material; or removing, by the terminal device, the third material from the similar image in response to an operation on the tenth control when the icon of the third material is in the selected state, and after the in response to an operation on the tenth control, the eighth interface not including the zoomed-out icon of the third material.

In this way, the terminal device can further provide a plurality of functions such as setting a cover and removing a similar image, thereby improving user experience in use of the similarity detection function.

In a possible implementation, when the third material is an audio and the fourth material is a video, the third material and the fourth material are materials whose similarity meets the preset condition, including: a similarity between audios in the third material and the fourth material being greater than a first threshold; and/or when the third material is an image and the fourth material is a video, the third material and the fourth material are materials whose similarity meets the preset condition, including: a ratio of a quantity of first images to a quantity of all images in the fourth material being greater than a second threshold, the first images being images in the fourth material whose similarities to the third material are greater than a third threshold.

In this way, the terminal device can implement similarity detection on a same type of materials, and can also implement similarity detection on different types of materials, thereby improving flexibility of the similarity detection function and also facilitating the user to sort the similar materials in a unified manner.

In a possible implementation, the sixth interface further includes a fourth icon, and the method further includes: displaying, by the terminal device, a ninth interface in response to an operation on the fourth icon, the ninth interface including: an icon of the first material, and when the second material is an audio, the ninth interface further including the icon of the second material.

In this way, the terminal device can preview audio materials, and can also sort audios into a material set in a unified manner, facilitating the user to view all the audio materials.

In a possible implementation, the method further includes: displaying, by the terminal device, an icon of the sixth material in the second interface in response to an operation of downloading the sixth material; and/or, displaying, by the terminal device, an icon of a seventh material in the second interface in response to an operation of obtaining the seventh material by recording, both the sixth material and the seventh material being audios.

In this way, the terminal device can view downloaded audio content in the multimedia application, to resolve a problem that it is relatively difficult for the user to locate an audio in a file management application and/or view a recording in the multimedia application, facilitating the user to manage all the audio materials in a unified manner.

In a possible implementation, the first material carries at least one first tag, the first tag being used for indicating a type of an audio, and the type of the audio including one or more of the following: recordings, conversations, music, sound effects, and voiceprints, and the method further includes: displaying, by the terminal device, a tenth interface in response to an operation of searching for the first tag in the second interface by the user, the tenth interface including the icon of the first material and the first tag.

In this way, the multimedia application in the terminal device can intelligently classify audio files and filter any audio type, to make it easier for the user to search for an audio in the multimedia application.

In a possible implementation, the second operation includes: an operation of dragging the icon of the first material to the icon of the second material, or an operation of dragging the icon of the second material to the icon of the first material.

In this way, the terminal device can integrate the materials into a material group in a dragging manner, and the method facilitates the user to add a new material to the material group at any time. In a possible implementation, the receiving, by the terminal device, a second operation on the second interface includes: displaying, by the terminal device, an eleventh interface in response to an operation on the icon of the first material in the second interface, the eleventh interface including: an eleventh control configured to merge at least two materials into a material group, the icon of the first material being in a selected state, and the icon of the second material being not in the selected state; and receiving, by the terminal device, a second operation on the eleventh control when the icon of the second material is selected.

In this way, the terminal device can integrate at least two materials into a material group by using material selection, and the method facilitates the user to integrate a plurality of materials into a material group at a time.

In a possible implementation, a first identifier is displayed in the icon of the first material, the first identifier being used for indicating that the first material is an audio; and the first icon displays one or more of the following: a zoomed-out icon of the first material, a zoomed-out icon of the second material, and a second identifier, the second identifier being used for indicating that the first icon corresponds to at least two materials.

In this way, the terminal device can quickly locate audio content by using the first identifier, and can also quickly locate a material group by using the second identifier, thereby improving flexibility of the user in material preview.

In a possible implementation, the method further includes: displaying, by the terminal device, a twelfth interface in response to an operation on the icon of the first material in the second interface, the twelfth interface including: the first material and a control configured to pin a material to top; and displaying, by the terminal device, the first material in the second interface in a pin-to-top manner in response to an operation on the control configured to specify a material.

In this way, the terminal device can pin a material or a material group to top in the multimedia application, so that the user can quickly find a needed material, thereby improving user experience in use of the multimedia application.

According to a second aspect, an embodiment of this application provides a display apparatus, the apparatus including a display unit and a processing unit, the display unit being configured to display a first interface, the first interface including an icon of a first application; the processing unit being configured to receive a first operation on the icon of the first application; in response to the first operation, the display unit being further configured to display a second interface, the second interface including: an icon of a first material and an icon of a second material, the first material being an audio, and the second material being an image, an audio, or a video; the processing unit being further configured to receive a second operation on the second interface; in response to the second operation, the display unit being further configured to display a first icon in the second interface; the processing unit being further configured to receive a third operation on the first icon; and in response to the third operation, the display unit being further configured to display a third interface, the third interface including: the first material and the second material.

According to a third aspect, an embodiment of this application provides a terminal device, including a memory and a processor, the memory being configured to store code instructions; and the processor being configured to run the code instructions, to cause the terminal device to perform the method as described in the first aspect or any one of implementations of the first aspect.

According to a fourth aspect, an embodiment of this application provides a computer-readable storage medium, the computer-readable storage medium storing instructions, and when the instructions are executed, causing a computer to perform the method as described in the first aspect or any one of implementations of the first aspect.

According to a fifth aspect, a computer program product is provided, including a computer program, and the computer program, when run, causing a computer to perform the method as described in the first aspect or any one of implementations of the first aspect.

It should be understood that the second aspect to the fifth aspect of this application correspond to the technical solution of the first aspect of this application, and the beneficial effects obtained by each aspect and the corresponding feasible implementations are similar. Details are not described herein again.

### BRIEF DESCRIPTION OF DRAWINGS

FIG. 1 is a schematic diagram of a scenario according to an embodiment of this application;
FIG. 2 is a schematic diagram of another scenario according to an embodiment of this application;
FIG. 3 is a schematic diagram of a hardware structure of a terminal device according to an embodiment of this application;
FIG. 4A to FIG. 4D are a schematic diagram of an interface for opening a multimedia application according to an embodiment of this application;
FIG. 5 is a schematic diagram of an interface for downloading an audio according to an embodiment of this application;
FIG. 6 is a schematic diagram of an interface for uploading an audio according to an embodiment of this application;
FIG. 7A to FIG. 7E are a schematic diagram of an interface for audio classification according to an embodiment of this application;
FIG. 8 is a schematic diagram of an interface for identifying similar materials according to an embodiment of this application;
FIG. 9A to FIG. 9F are a schematic diagram of an interface for processing similar materials according to an embodiment of this application;
FIG. 10 is a schematic diagram of an interface for split-screen display in a multimedia application according to an embodiment of this application;
FIG. 11 is a schematic diagram of an interface for integrating material groups according to an embodiment of this application;
FIG. 12 is a schematic diagram of an interface for integrating material groups according to an embodiment of this application;
FIG. 13A to FIG. 13D are a schematic diagram of an interface for previewing a material group according to an embodiment of this application;
FIG. 14A to FIG. 14D are a schematic diagram of an interface for adding a material according to an embodiment of this application;
FIG. 15 is a schematic diagram of an interface for pinning a material to top according to an embodiment of this application;
FIG. 16 is a schematic flowchart of display according to an embodiment of this application;
FIG. 17 is a schematic diagram of a structure of a display apparatus according to an embodiment of this application; and
FIG. 18 is a schematic diagram of a hardware structure of another terminal device according to an embodiment of this application.

### DESCRIPTION OF EMBODIMENTS

To clearly describe the technical solutions in embodiments of this application, words such as "first" and "second" are used in the embodiments of this application to distinguish same items or similar items that provide basically same functions or purposes. For example, a first value and a second value are merely used to distinguish different values, and are not intended to limit a sequence thereof. Persons skilled in the art may understand that the words such as "first" and "second" do not limit a quantity or an execution order, and the words such as "first" and "second" do not necessarily indicate a difference.

It should be noted that, in this application, the word such as "example" or "for example" is used to indicate giving an example, an illustration, or a description. Any embodiment or design solution described as an "exemplary" or "for example" in this application should not be explained as being more preferred or having more advantages than another embodiment or design solution. More exactly, the use of words such as "exemplarily" or "for example" is intended to present concepts in a specific manner.

In this application, "at least one" means one or more, and "a plurality of" means two or more. The word "and/or" describes an association relationship for describing associated objects and represents that three relationships may exist. For example, A and/or B may represent: only A exists, both A and B exist, and only B exists, where A and B may be singular or plural. The character "/" generally indicates an "or" relationship between the associated objects. The expression "at least one of the following items" or a similar expression thereof means any combination of these items, including a single item (piece) or any combination of a plurality of items (pieces). For example, at least one of a, b, or c may represent that a, b, c, a-b, a-c, b-c, or a-b-c, where a, b, and c may be single or multiple.

With the development of terminal technologies and the rise of short videos, more users use a video clipping function in terminal devices to clip materials such as images, videos, and audios, thereby creating short videos. Before video clipping, the terminal device may select a material that needs to be clipped, such as an image, a video, and an audio. However, since images and video content are arranged in chronological order in a gallery, related materials are relatively scattered, and the user does not know where a needed material is during material import, thereby missing important materials and affecting user experience in use of the video clipping function.

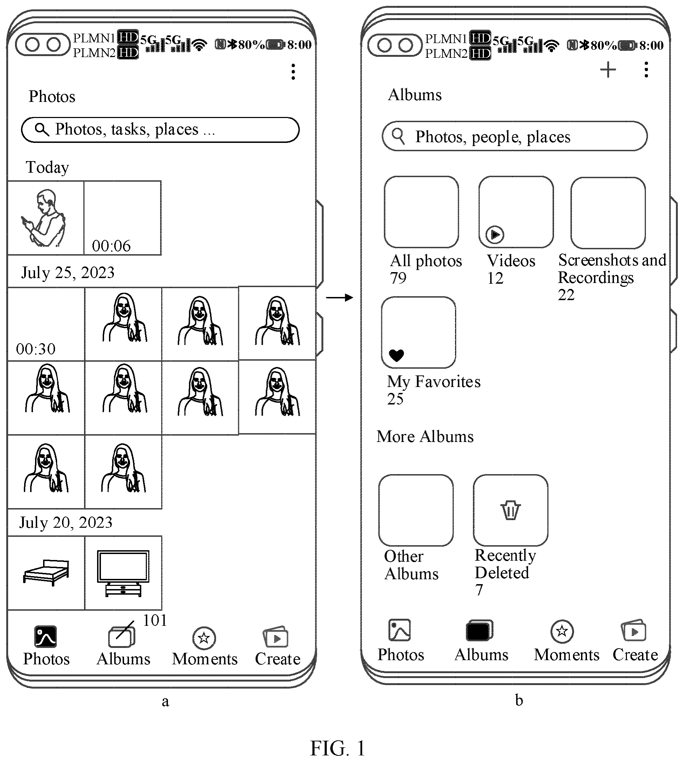

For example, FIG. 1 is a schematic diagram of an interface for viewing materials according to an embodiment of this application. In the embodiment corresponding to FIG. 1, exemplary description is provided by using an example in which the terminal device is a mobile phone, and this example does not constitute a limitation on this embodiment of this application.

When the terminal device receives that the user opens a gallery application, the terminal device may display an interface shown in a in FIG. 1. The interface may be a photo display interface. The interface may include: a thumbnail corresponding to at least one material, and a toolbar disposed at the bottom of a screen. The material may include: an image and a video, and the at least one material may be sorted in reverse chronological order. The toolbar may include: a control 101 configured to view an album.

When the terminal device receives a tap operation of the user on the control 101, the terminal device may display an interface shown in b in FIG. 1. The interface may be an album display interface. The interface may include: a thumbnail corresponding to at least one album, for example, thumbnails corresponding to all photo albums, a thumbnail corresponding to a video album, a thumbnail corresponding to a screenshots and recordings album, and a thumbnail corresponding to a My Favorites album.

It may be understood that, to prevent a case in which the user does not know a needed material during material import because related materials are scattered, the user may store the related materials into an album. Further, the needed material may be imported from an album directory before video clipping is performed. However, as more videos need to be clipped, there may be more albums for storing materials needed by the videos, which may affect the user's search for materials before video clipping over time.

It may be understood that the user has a requirement for unified management of materials. How to implement material integration without affecting album management logic becomes an urgent problem to be resolved.

In view of this, an embodiment of this application provides a display method, so that the terminal device can integrate at least two materials in the interface shown in a in FIG. 1 into a material group based on a user operation, implementing a requirement of the user for material integration. In addition, the terminal device can also display the materials in the material group based on an operation of the user for the material group, implementing batch sorting of the materials in the material group by the user. The at least two materials may include an audio.

In a possible implementation, when an audio material is imported, since an audio is generally stored in a file management application and there are more folders, deeper paths, and inconsistent file names in the file management application, it is very difficult for the user to quickly locate the audio.

After the user downloads an audio from a channel such as a network, it may also be difficult to quickly locate the audio. When the user uploads an audio from another application, it is also difficult to find an audio upload path from the file management application.

In a possible implementation, for some video clipping applications, after the user downloads an audio from a video clipping application, the audio can only be viewed in the video clipping application, and is limited by the video clipping application, and the audio cannot be shared to another application of a terminal device.

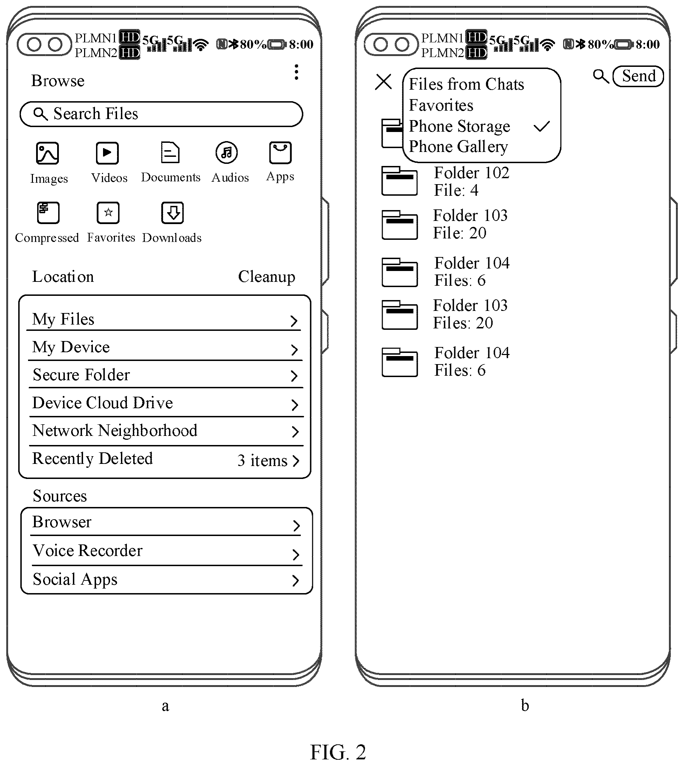

For example, FIG. 2 is a schematic diagram of another scenario according to an embodiment of this application.

In a case that the user needs to view a downloaded audio, when the terminal device receives an operation of opening the file management application by the user, the terminal device may display an interface shown in a in FIG. 2, so that the user can search for the audio according to a file type, or search for the audio according to a file storage position, or search for the audio according to a file source.

Alternatively, when the user needs to upload an audio to another application, the terminal device may display an interface shown in b in FIG. 2 when receiving an operation of triggering, by the user, a control corresponding to a file search in the another application. Therefore, the user can find, from at least one folder in phone storage, the audio that needs to be uploaded.

It may be understood that, since the terminal device lacks unified management on audio files, viewing, uploading, and using processes of the audio files are complex. In addition, a user who often uses the video clipping function uses audios more frequently, and a complex audio searching manner affects user experience.

Therefore, according to the display method provided in this embodiment of this application, the terminal device can preview images, videos, and audios in a unified manner in the first application, thereby facilitating the user to quickly locate a needed audio from the first application. The first application may be a multimedia application described in the embodiments of this application.

It may be understood that the terminal device may also be referred to as a terminal (terminal), a user equipment (user equipment, UE), a mobile station (mobile station, MS), a mobile terminal (mobile terminal, MT), or the like. The terminal device may be a mobile phone (mobile phone), an intelligent television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in this embodiment of this application.

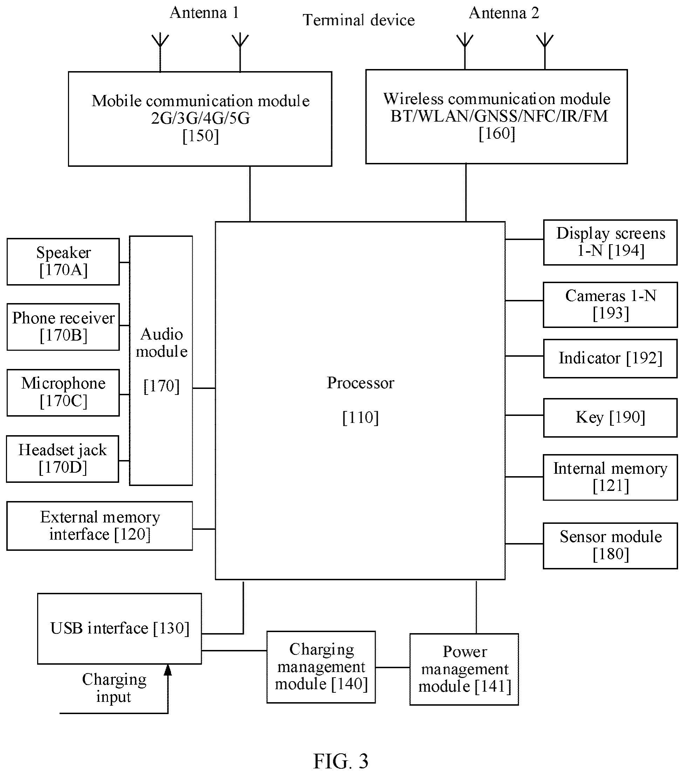

To better understand this embodiment of this application, a structure of the terminal device in this embodiment of this application is described below. For example, FIG. 3 is a schematic structural diagram of a terminal device according to an embodiment of this application.

The terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, an indicator 192, a camera 193, a display screen 194, and the like.

The sensor module 180 may include one or more of the following: a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like, which is not specifically limited in this embodiment of this application.

It may be understood that the structure shown in this embodiment of this application does not constitute a specific limitation on the terminal device. In some other embodiments of this application, the terminal device may include more or fewer components than those shown in the figure, or some components may be combined, or some components may be split, or there is a different component arrangement. The components shown in the figure may be implemented by using hardware, software, or a combination of software and hardware.

The processor 110 may include one or more processing units. Different processing units may be separate devices, or may be integrated to one or more processors. A memory may be further disposed in the processor 110, to store instructions and data.

The USB interface 130 is an interface that conforms to the USB standard specification, and may be specifically a Mini USB interface, a Micro USB interface, a USB Type C interface, or the like. The USB interface 130 may be configured to connect to a charger to charge the terminal device, or may be configured to perform data transmission between the terminal device and a peripheral device, or may be configured to connect to a headset to play back audio by using the headset. The interface may be further configured to connect to another electronic device such as an AR device. The charging management module 140 is configured to receive a charging input from the charger. The charger may be a wireless charger or a wired charger. The power management module 141 is configured to connect to the charging management module 140 and the processor 110.

A wireless communication function of the terminal device may be implemented by using the antenna 1, the antenna 2, the mobile communication module 150, the wireless communication module 160, a modem processor, a baseband processor, and the like.

The antenna 1 and the antenna 2 are configured to transmit and receive an electromagnetic wave signal. Each antenna in the terminal device may be configured to cover one or more communication bands. Different antennas may further be reused to improve antenna utilization.

The mobile communication module 150 may provide a solution to wireless communication such 2G/3G/4G/5G applied to the terminal device. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit the electromagnetic wave to the modem processor for demodulation.

The wireless communication module 160 may provide a solution for wireless communication including wireless local area networks (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), and the like that are applied to the terminal device.

The terminal device implements a display function by using a GPU, the display screen 194, an application processor, and the like. The GPU is an image processing microprocessor, and is connected to the display screen 194 and the application processor. The GPU is configured to perform mathematical and geometric calculations and perform graphics rendering.

The display screen 194 is configured to display an image, a video, and the like. The display screen 194 includes a display panel. In some embodiments, the terminal device may include 1 or N display screens 194, where N is a positive integer greater than 1.

The terminal device may implement a photographing function through the ISP, the camera 193, the video codec, the GPU, the display screen 194, an application processor, and the like.

The camera 193 is configured to capture a still image or a video. In some embodiments, the terminal device may include 1 or N cameras 193, where N is a positive integer greater than 1.

The external memory interface 120 may be configured to connect to an external storage card such as a micro SD card, to extend a storage capability of the terminal device. The external storage card communicates with the processor 110 by using the external memory interface 120, to implement a data storage function, for example, to store files such as music and a video into the external memory card.

The internal memory 121 may be configured to store computer-executable program code, and the executable program code includes instructions. The internal memory 121 may include a program storage area and a data storage area.

The terminal device may implement an audio function by using the audio module 170, the speaker 170A, the phone receiver 170B, the microphone 170C, the headset jack 170D, the application processor, and the like, such as music playback and recording.

The audio module 170 is configured to convert digital audio information into an analog audio signal for output, and is also configured to convert an analog audio input into a digital audio signal. The speaker 170A, also referred to as a "loudspeaker", is configured to convert an electrical audio signal into a sound signal. Music may be listened to or a hands-free call can be answered by using the speaker 170A in the terminal device. The phone receiver 170B, also referred to as an "earpiece", is configured to convert an electrical audio signal into a sound signal. When the terminal device is used to answer a call or receive voice information, the phone receiver 170B may be put close to a human ear to listen to a voice. The headset interface 170D is configured to connect to a wired headset. The microphone 170C, also referred to as a "voice tube" or "mike", is configured to convert a sound signal into an electrical signal. The terminal device in this embodiment of this application may be provided with a microphone 170C.

The pressure sensor is configured to sense a pressure signal, and may convert the pressure signal into an electrical signal. In some embodiments, the pressure sensor may be disposed on the display screen 194. The gyroscope sensor may be configured to determine a movement posture of the terminal device. The barometric pressure sensor is configured to measure barometric pressure. The magnetic sensor includes a Hall sensor. The acceleration sensor may detect magnitude of accelerations in various directions (generally on three axes) of the terminal device. The distance sensor is configured to measure a distance. The optical proximity sensor may include, for example, a light emitting diode (LED) and an optical detector, such as a photodiode. The ambient light sensor is configured to sense luminance of ambient light. The fingerprint sensor is configured to collect a fingerprint. The temperature sensor is configured to detect a temperature. The touch sensor is also referred to as a "touch device". The bone conduction sensor may acquire a vibration signal.

The touch sensor may be disposed on the display screen 194. The touch sensor and the display screen 194 form a touchscreen, which is also referred to as a "touch control screen".

The key 190 includes a power-on key, a volume key, and the like. The key 190 may be a mechanical key, or may be a touch-type key. The terminal device may receive a key input, and generate a key signal input related to a user setting and function control of the terminal device. The indicator 192 may be an indicator light, and may be configured to indicate a charging state and a power change, or may be configured to indicate a message, a missed call, a notification, and the like.

A software system of the terminal device may adopt a hierarchical architecture, an event-driven architecture, a microkernel architecture, a microservice architecture, or a cloud architecture. Details are not described herein again.

The following describes the technical solutions of this application and how to resolve the foregoing technical problems according to the technical solutions of this application in detail by using specific embodiments. The following specific embodiments may be independently implemented, or may be combined with each other, and the same or similar concepts or processes may not be described in detail in some embodiments.

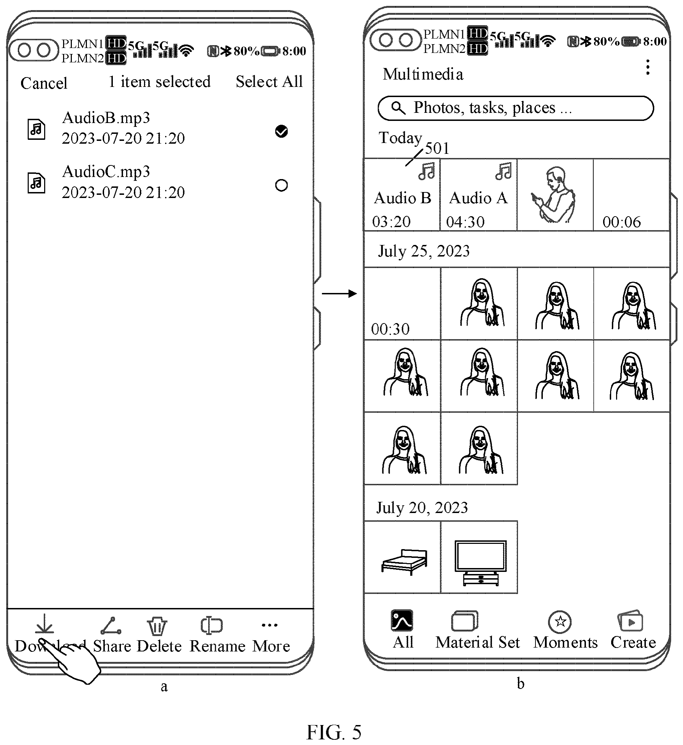

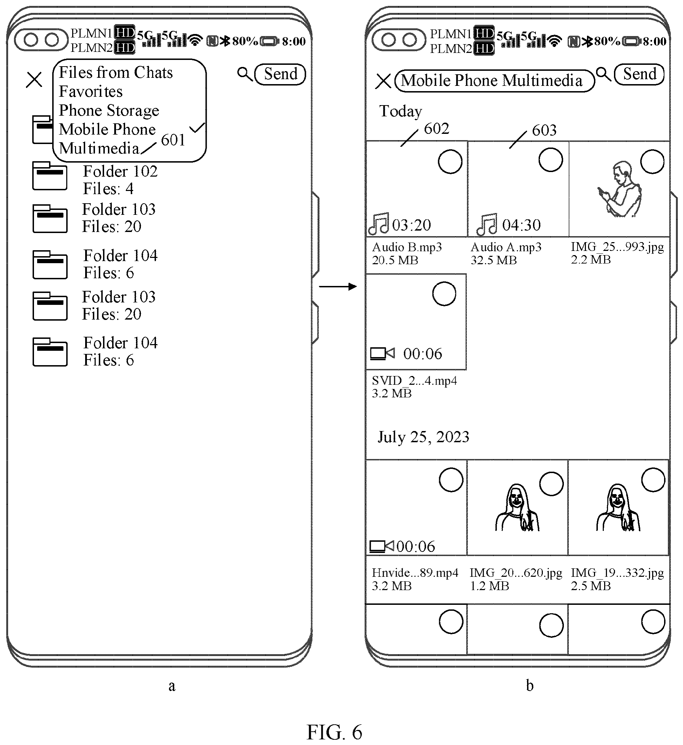

An embodiment of this application provides a display method, to upgrade a gallery application to a multimedia application. The multimedia application may implement unified management on images, videos, and audios (referring to an embodiment corresponding to FIG. 4A to FIG. 4D). For example, the user may preview a downloaded audio in the multimedia application (referring to an embodiment corresponding to FIG. 5), and the user may also quickly locate an audio during audio uploading in the multimedia application (referring to an embodiment corresponding to FIG. 6).

It may be understood that the terminal device may set a storage path of audios in a corresponding folder of the multimedia application, so that the user can view the audios in the multimedia application, or it may be understood that the multimedia application may provide a shortcut for viewing audios, facilitating the user to preview the audios in the multimedia application at any time.

For example, FIG. 4A to FIG. 4D are a schematic diagram of an interface for opening a multimedia application according to an embodiment of this application.

The terminal device displays an interface shown in FIG. 4A. The interface may be referred to as a desktop. The interface may include an icon 401 of the multimedia application.

The multimedia application may be an application program used for managing images, videos, and audios on a terminal device such as a smartphone or a tablet computer. The multimedia application may also implement clipping of materials such as images, videos, and audios. The multimedia application may also be referred to as a "multimedia library" or a "resource library". A name of the application program is not limited in this embodiment.

When the terminal device receives a tap operation of the user on the icon 401 of the multimedia application, the terminal device may display an interface shown in FIG. 4B. The interface may be referred to as an all-materials interface, with a word "Multimedia" displayed in an upper-left corner of the interface. The interface may include: a thumbnail corresponding to at least one material, and a toolbar disposed at the bottom of a screen. The thumbnail corresponding to the at least one material may be sorted in reverse chronological order. The thumbnail may also be referred to as an icon or an identifier.

The interface shown in FIG. 4B may include a thumbnail 402 corresponding to an audio A. An audio identifier may be displayed in the thumbnail 402 (for example, an identifier in a musical note shape is displayed in an upper-right corner of the thumbnail 402), a playback duration of the audio A may be displayed in the thumbnail 402 (for example, a playback duration in a lower-left corner of the thumbnail, such as 04:30), and a name of the audio A or a filename of the audio A may also be displayed in the thumbnail 402. Specific content displayed in the thumbnail 402 is not limited in this embodiment of this application.

The toolbar may include: a control 403 configured to view all materials, a control 404 configured to view a material set, a control configured to view photos in a time dimension (or referred to as a moment control), and a control configured to implement a clipping function according to the materials (or referred to as a creation control). The control 403 is in a selected state, a word "All" is displayed in the control 403, and words "Material Set" are displayed in the control 404.

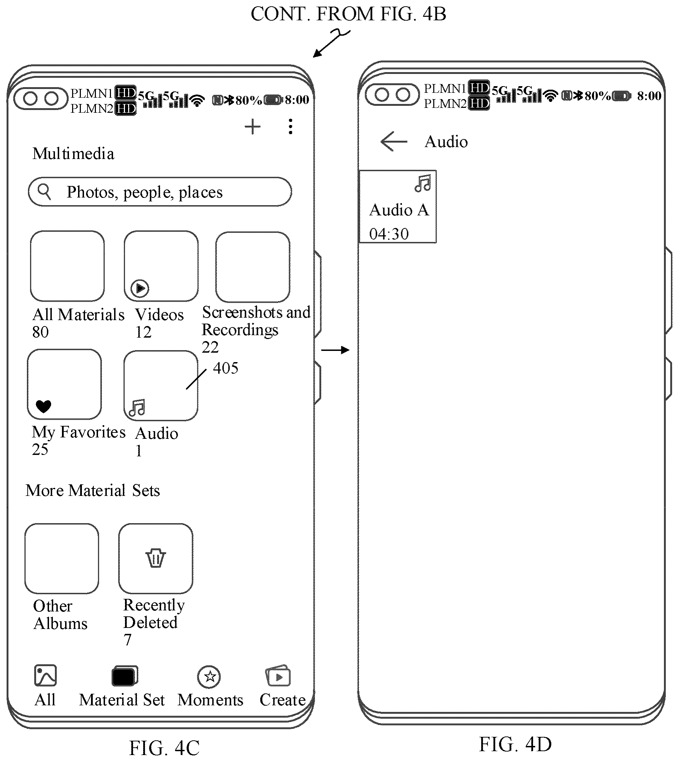

When the terminal device receives a tap operation of the user on the control 404, the terminal device may display an interface shown in FIG. 4C. The interface may be referred to as a material set interface, with a word "Multimedia" displayed in an upper-left corner of the interface. The interface may include: a thumbnail corresponding to at least one material set. The material set may include: an album material set, an audio material set, a video material set, and the like.

The interface shown in FIG. 4C may include: a thumbnail corresponding to the album material set, a thumbnail corresponding to the video material set, and a thumbnail 405 corresponding to the audio material set. An audio identifier (for example, an identifier in a lower-left corner of the thumbnail 405) may be displayed in the thumbnail 405.

When the terminal device receives a tap operation of the user on the thumbnail 405, the terminal device may display an interface shown in FIG. 4D. A thumbnail corresponding to the audio A may be displayed in the interface. Then, when the terminal device receives a trigger operation of the user on the thumbnail corresponding to the audio A, the terminal device may implement functions such as playback of the audio A, which is not shown in FIG. 4A to FIG. 4D.

Based on this, the terminal device may provide a multimedia application. The multimedia application may implement unified management on image, video, and audio materials, facilitating the user to view the audio material at any time.

Based on the embodiment corresponding to FIG. 4A to FIG. 4D, the multimedia application may include an audio obtained by the terminal device based on downloading of the user. For details, refer to the embodiment corresponding to FIG. 5.

For example, FIG. 5 is a schematic diagram of an interface for downloading an audio according to an embodiment of this application.

The terminal device displays an interface shown in a in FIG. 5. The interface may be a file download interface. The interface may include: an audio B and an audio C. The audio B is in a selected state. When the terminal device receives a trigger operation of the user on a download control at the bottom of the screen, the terminal device may download the audio B locally and provide a shortcut to the audio B in the multimedia application, so that the user can view the audio B in the multimedia application.

In a possible implementation, when the terminal device receives the trigger operation of the user on the download control at the bottom of the screen, the terminal device may alternatively display prompt information in the interface shown in a in FIG. 5. The prompt information is used for prompting the user to view the audio B from the multimedia application, which is not shown in the interface shown in a in FIG. 5.

When the terminal device receives an operation of opening the all-materials interface by the user, the terminal device may display an interface shown in b in FIG. 5. The interface may include: a thumbnail 501 corresponds to the audio B. An audio identifier may be displayed in the thumbnail 501, and a playback duration of the audio B, for example, 3 minutes and 20 seconds, may be displayed in the thumbnail 501. The operation of opening the all-materials interface may be that the user swipes left or right along the bottom of the display screen, or the user triggers a multimedia application control from a desktop, or the user triggers a thumbnail corresponding to the multimedia application from a backend multi-tasking interface, which is not limited in this embodiment of this application.

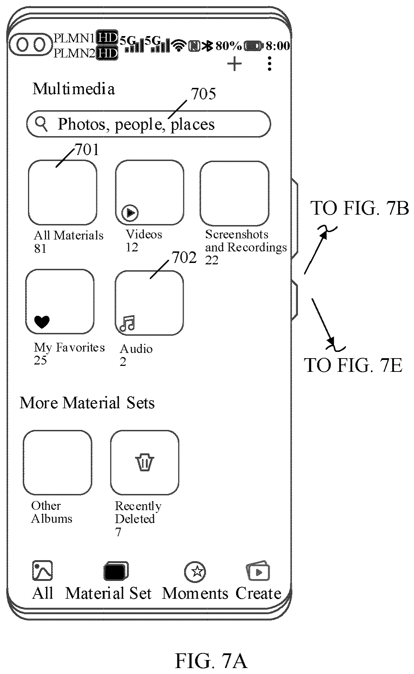

In a possible implementation, after the terminal device downloads the audio B, the terminal device may identify information such as timbres, pitches, and relative loudness of various objects in the audio by means of identification of an audio timbre, and set a tag used for indicating an audio type for the audio B, to implement subsequent filtering for the audio B. For an audio filtering process, refer to an embodiment corresponding to FIG. 7A to FIG. 7E. Details are not described herein again.

Based on this, the terminal device can view downloaded audio content in the multimedia application, to resolve a problem that it is relatively difficult for the user to locate an audio in the file management application.

Based on the embodiment corresponding to FIG. 4A to FIG. 4D, the terminal device may also search a directory corresponding to the multimedia application for an audio and upload the audio to another application. For details, refer to the embodiment corresponding to FIG. 6.

For example, FIG. 6 is a schematic diagram of an interface for uploading an audio according to an embodiment of this application.

The terminal device displays an interface shown in a in FIG. 6. The interface may be an interface for uploading materials in another application. The interface may include a window for selecting a file directory. The window may include: a control configured to select a file in chat, a control configured to select a file in Favorites, a control configured to select a file from phone storage, and a control 601 configured to select a file from a multimedia application of the mobile phone. Moreover, other content displayed in the interface may be a file directory opened from the phone storage.

When the terminal device receives a tap operation of the user on the control 601, the terminal device may display an interface shown in b in FIG. 6. The interface may include: thumbnails corresponding to materials in the multimedia application, for example, materials such as a thumbnail 602 corresponding to the audio A and a thumbnail 603 corresponding to the audio B. A selected control (for example, a circular control displayed in an upper-right corner of the thumbnail) may be displayed in any thumbnail, and the material displayed in the interface shown in b in FIG. 6 may be included in the interface shown in b in FIG. 5.

When the terminal device receives a tap operation of the user on at least one selected control in the interface shown in b in FIG. 6 and further receives a trigger operation of the user on a send control in the upper-right corner, the terminal device may upload at least one material corresponding to the at least one selected control to another application, to implement uploading of an image, a video, or an audio.

Compared with acquiring an audio based on the embodiment corresponding to FIG. 2, the terminal device may search a directory of the multimedia application for an audio that needs to be uploaded, so as to resolve the problem of difficulty in quickly locating the needed audio from at least one folder in the phone storage.

An embodiment of this application provides a display method, so that a multimedia application can implement intelligent classification of audios and provide a filtering function for any audio type.

For example, FIG. 7A to FIG. 7E are a schematic diagram of an interface for audio classification according to an embodiment of this application.

After storing any audio, the terminal device may identify the audio and set at least one tag for the audio according to an identification result, to distinguish different types of audios. A type of the tag may include one or more of the following: recordings, conversations, music, sound effects, voiceprints, and the like, which is not limited in this embodiment of this application.

An audio with a recording type may be an audio recorded by the terminal device by using a recording function. The audio with the recording type may be displayed in a recorder application, and may alternatively be displayed in a multimedia application. An audio with a conversation type may be an audio including at least two speakers.

When receiving that the user opens the all-materials interface, the terminal device may display an interface shown in FIG. 7A. The interface may include: a thumbnail 701 corresponding to an all-materials set, a thumbnail 702 corresponding to an audio material set, and a search box 705. The all-materials set may include all materials in a multimedia application, that is, all image, video, and audio content.

It may be understood that the terminal device may implement audio filtering in any material set, and may also implement audio filtering based on any search box in the multimedia application.

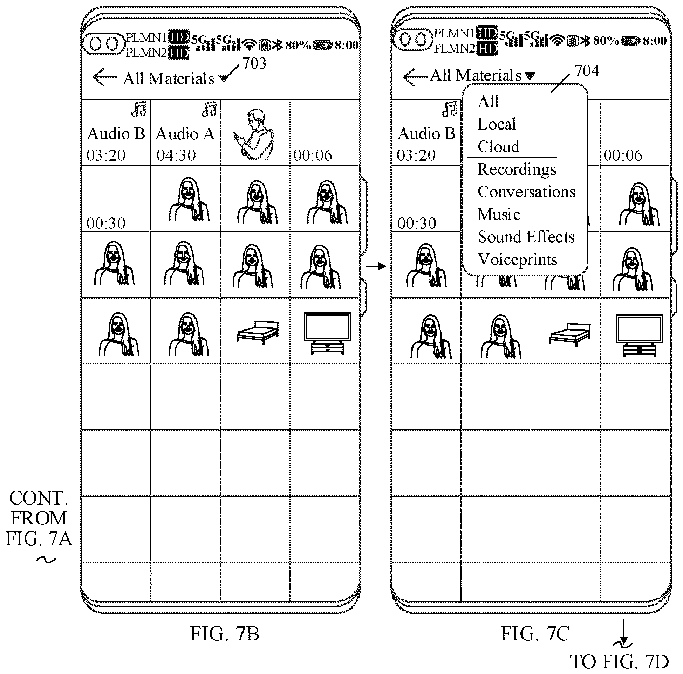

In an implementation, the terminal device may support implementation of audio filtering in any material set. For example, when the terminal device receives a tap operation of the user on the thumbnail 701, the terminal device may display an interface shown in FIG. 7B. A material displayed in the interface is the same as the material displayed in the interface shown in b in FIG. 5. A generation time of the material may be viewed in the interface shown in b in FIG. 5.

The interface shown in FIG. 7B may display a thumbnail corresponding to all materials. A name of the thumbnail 701 may be displayed in an upper-left corner of the interface. For example, words "All Materials" are displayed. A control 703 configured to filter materials may also be displayed in the interface.

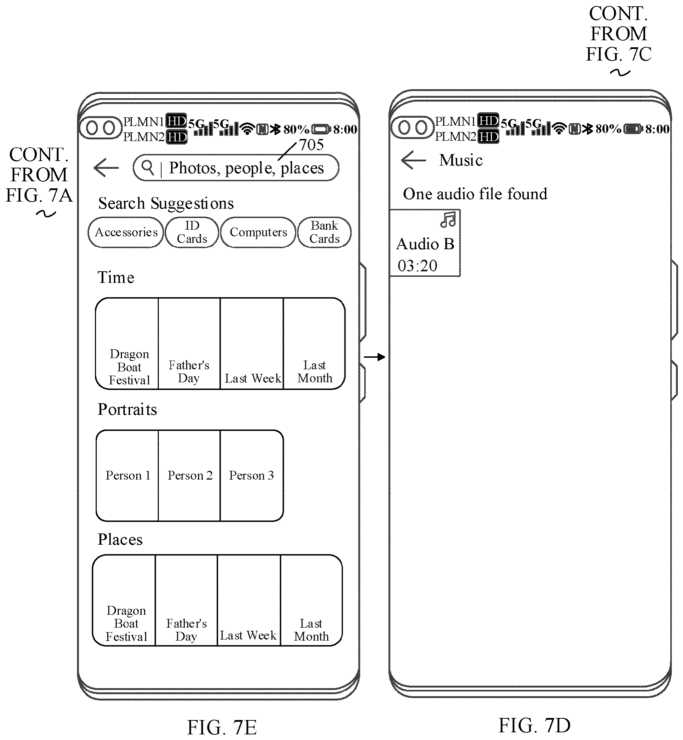

When the terminal device receives a tap operation of the user on the control 703, the terminal device may display an interface shown in FIG. 7C. The interface may include a window 704. The window 704 includes a control configured to filter material sources, a control configured to filter audio types, and the like. For example, the control configured to filter material sources may include one or more of the following: a control configured to filter all materials, a control configured to filter local materials, and a control configured to filter materials from a cloud. The control configured to filter audio types may include one or more of the following: a control configured to filter recordings, a control configured to filters conversations, a control configured to filter music, a control configured to filter sound effects, a control configured to filter voiceprints, and the like. When the terminal device receives a tap operation of the user on the control configured to filter music, the terminal device may display an interface shown in FIG. 7D. The interface may include: a thumbnail corresponding to the audio B. The audio B may carry a music tag.

In a possible implementation, when the terminal device receives a tap operation of the user on the control configured to filter voiceprints, the terminal device may classify audios according to different voiceprints. For example, the terminal device may identify voiceprints of different users, identify a voiceprint of an animal, or the like. In a scenario in which the terminal device can identify voiceprints of different users, in the interface shown in FIG. 7D, the terminal device may display: an audio including a user A, an audio including a user B, and the like, which are not shown in FIG. 7A to FIG. 7E.

In a possible implementation, when the terminal device receives a tap operation of the user on the thumbnail 702, the terminal device may display a thumbnail corresponding to all audios in the multimedia application and the control 703, to implement audio filtering in the audio material set. It may be understood that the terminal device may alternatively implement audio filtering in any material set including audio materials, or implement audio filtering in the interface shown in b in FIG. 5, which is not limited in this embodiment of this application.

In another implementation, the terminal device implements audio filtering based on any search box in the multimedia application. The search box may be the search box in the interface shown in b in FIG. 5, or may be the search box 705 shown in FIG. 7A (or FIG. 7E). For example, when the terminal device receives a tap operation of the user on the search box 705, the terminal device may display an interface shown in FIG. 7E. The interface may include: the search box 705, and a material set obtained by classifying all materials based on types such as time, portraits, and places. In a possible implementation, the terminal device may alternatively implement audio filtering based on the search box in the interface shown in b in FIG. 5. For example, in response to a trigger operation of the user on the search box in the interface shown in b in FIG. 5, the terminal device may alternatively display the interface shown in FIG. 7E.

When the terminal device receives an operation of entering a word "music" in the search box 705 by the user, the terminal device may display an interface shown in FIG. 7D.

In a possible implementation, the terminal device may alternatively filter audio types in the all-materials interface by using the search box and/or the control configured to filter audio types. A specific implementation process is similar to that described in the embodiment corresponding to FIG. 7A to FIG. 7E, and details are not described herein again.

Based on this, the multimedia application in the terminal device can intelligently classify audio files and filter any audio type, to make it easier for the user to search for an audio in the multimedia application.

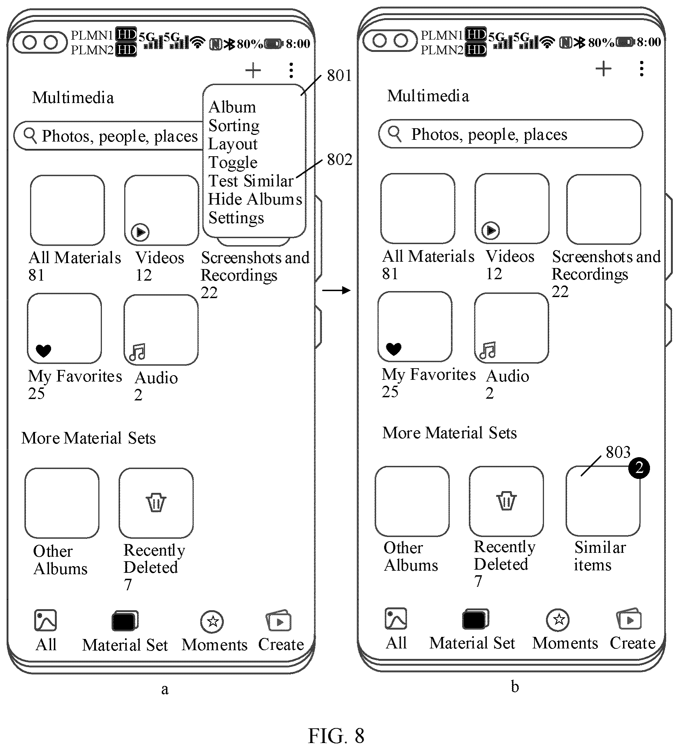

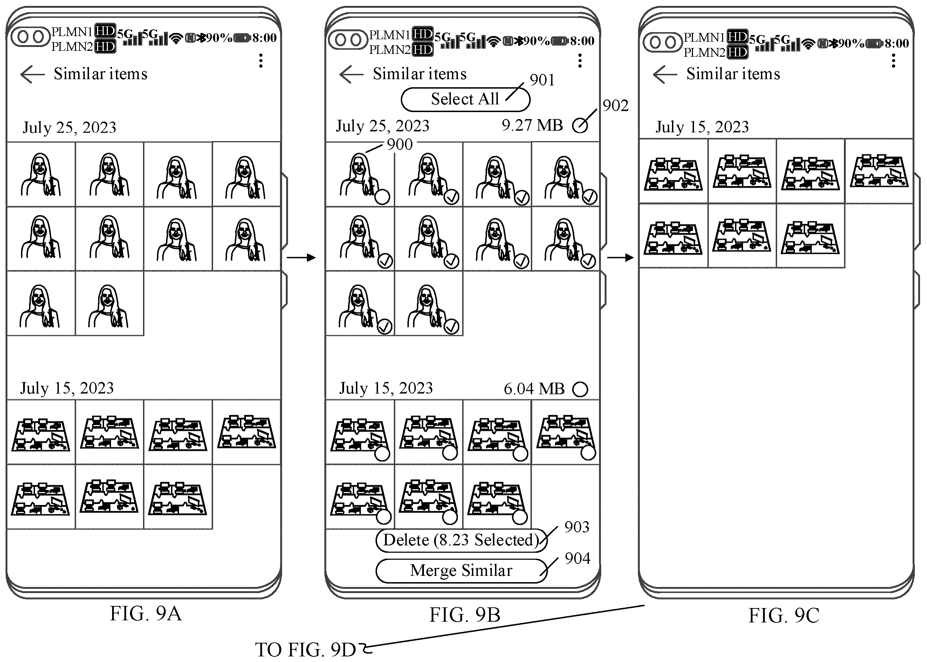

An embodiment of this application provides a display method, so that a multimedia application can identify a similar material (refer to an embodiment corresponding to FIG. 8) and process the similar material (refer to an embodiment corresponding to FIG. 9A to FIG. 9F).

For example, FIG. 8 is a schematic diagram of an interface for identifying similar materials according to an embodiment of this application.

When the terminal device receives a tap operation of the user on a More Functions control (the More Functions control may be displayed as "+") in an upper-right corner of the interface shown in FIG. 7A, the terminal device may display an interface shown in a in FIG. 8. The interface may include a window 801. The window 801 may include: a control configured to test similar materials (or referred to as a test-similar control) 802.

When the terminal device receives a trigger operation of the user on the control 802, the terminal device may perform similarity detection on all materials in the multimedia application, and when detecting that there are two similar items, display an interface shown in b in FIG. 8. The interface may include a thumbnail 803 corresponding to the similar items. A quantity of the detected similar items may be displayed in an upper-right corner of the thumbnail 803, for example, displayed as 2.

The terminal device may detect a similarity between at least two materials, for example, detect a similarity between at least two images, detect a similarity between at least two videos, detect a similarity between at least two audios, detect a similarity between an image and a video, detect a similarity between a video and an audio, and the like.

A specific implementation of detecting the similarity between the at least two images may be as follows: When obtaining at least two images by shooting, the terminal device may set, for each image, a tag for indicating a shooting time, detect at least two images satisfying a time threshold when performing similarity detection, and further mark the at least two images as similar items when determining that a similarity between the at least two images is greater than a first similarity threshold. Additionally/alternatively, the terminal device may detect images acquired at different time points, and when detecting that a similarity between at least two images is greater than the first similarity threshold, mark the at least two images as a similar item.

A specific implementation of detecting the similarity between the image and the video may be as follows: The terminal device may disassemble the video into individual frames, compare a similarity between the image and each image in the video one by one, determine that there is a similarity between the image and the video when a ratio of a quantity of images whose similarities meet a preset condition to a quantity of all images in the video is greater than a third similarity threshold, and mark the image and the video as a similar item.

A specific implementation of detecting the similarity between the video and the audio may be as follows: The terminal device may extract an audio from the video and compare a similarity between the two audios. For example, when determining that the similarity between the two audios is greater than a fourth similarity threshold, the terminal device determines that there is a similarity between the video and the audio, and marks the video and the audio as a similar item.

It may be understood that the terminal device may detect similar materials in response to a tap operation of the user on the control 802, or the terminal device may periodically detect the similar materials, which is not limited in this embodiment of this application.

For example, FIG. 9A to FIG. 9F are a schematic diagram of an interface for processing similar materials according to an embodiment of this application. In the embodiment corresponding to FIG. 9A to FIG. 9F, an example in which at least one detected similar item includes an image is used for description. When the similar item includes a video or an audio, a processing process is similar to that of an image, and details are not described herein again.

When the terminal device receives a tap operation of the user on the thumbnail 803 in the interface shown in b in FIG. 8, the terminal device may display an interface shown in FIG. 9A. The interface shown in FIG. 9A may include two detected similar items, for example, a detected similar item including 10 images, and a detected similar item including 6 images. The two similar items are sorted in reverse chronological order.

When the terminal device receives an operation of selecting at least two images (e.g., selecting 9 images) in the interface shown in FIG. 9A by the user, the terminal device may display an interface shown in FIG. 9B. The interface shown in FIG. 9B may be understood as an interface for processing similar items. The operation of selecting at least two images may include: a long-press operation on any selected image, a tap operation on another image of the at least two images, and the like, which is not limited in this embodiment of this application.

In a possible implementation, when the terminal device receives a long-press operation of the user on any similar image in a similar item, the terminal device may select, by default, an image in the similar item whose similarity to the selected similar image is greater than a second similarity threshold, and further display the interface shown in FIG. 9B. The second similarity threshold is greater than the first similarity threshold. For example, the similar item may be a detected item on July 25, 2023.

It may be understood that the terminal device may assist the user in filtering similar images by using image similarity re-identification, so as to select a most similar image.

In a possible implementation, when the terminal device receives a long-press operation of the user on any similar image in a similar item, the terminal device may select, by default, all similar images in the similar item, which is not shown in FIG. 9A to FIG. 9F.

In the interface shown in FIG. 9B, the interface may include one or more of the following: a thumbnail 900, a control 901 configured to select all images (or referred to as a select-all control), a control 902 configured to select all similar images in a similar item, a control 903 configured to delete a selected similar image (or referred to as a delete control), and a control 904 configured to merge similar images (or referred to as a merge-similar control). A storage size of all selected images in an item may be displayed around the control 902, and a storage size of a selected image may be displayed in the control 903.

It may be understood that display positions and display forms of the control 901, the control 902, the control 903, and the control 904 in the interface shown in FIG. FIG. 9B are not specifically limited in this embodiment of this application.

In a case that the terminal device has selected the 9 similar images as shown in FIG. 9B, when the terminal device receives a trigger operation of the user on the control 904, the terminal device may fold the selected similar images and then display an interface shown in FIG. 9C. The interface shown in FIG. 9C includes unprocessed similar items.

In a possible implementation, in a case that the terminal device has selected the 9 similar images as shown in FIG. 9B, when the terminal device receives a trigger operation of the user on the control 904, the terminal device may merge the selected 9 images and delete an image corresponding to the thumbnail 900 in the similar item. In this scenario, the image corresponding to the thumbnail 900 may be moved to a material set corresponding to Recently Deleted, facilitating the user to retrieve the image and continue to process similar images at any time, which is not shown in FIG. 9A to FIG. 9F.

In a possible implementation, the terminal device may not delete an unmerged similar image. That is, the user may manually delete an unneeded similar image in the interface shown in FIG. 9B.

In an implementation of restoring a similar image, when detecting the similar image, the terminal device may add, to the similar image, a tag used for indicating the similar image. Even if the similar image is deleted, the tag in the similar image remains. When the terminal device restores the similar image in the material set corresponding to Recently Deleted, the terminal device may redisplay the similar image in the interface shown in FIG. 9A according to the tag in the similar image.

In another implementation of restoring a similar image, when detecting the similar image, the terminal device may add, to the similar image, a tag used for indicating the similar image, and delete the tag when deleting the similar image. When the terminal device restores any image in the material set corresponding to Recently Deleted, the terminal device may trigger a similarity detection process, and perform similarity detection on the restored image and all materials in the multimedia application. For the similarity detection process, refer to the embodiment corresponding to FIG. 8. Details are not described herein again.

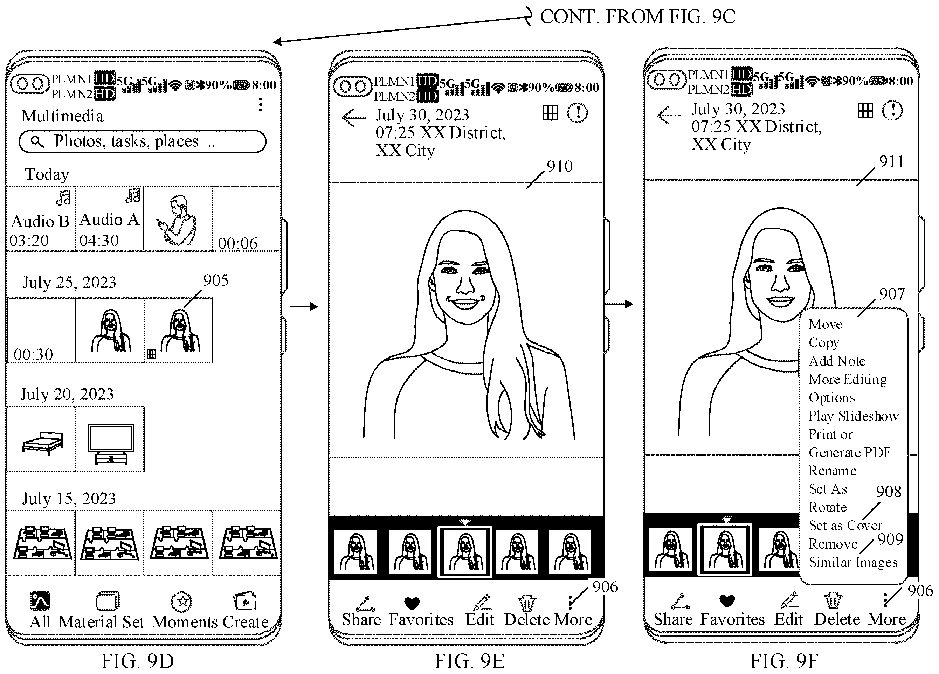

When the terminal device receives that the user opens the all-materials interface, the terminal device may display an interface shown in FIG. 9D. The interface may include: a thumbnail 905. A thumbnail of any one of the at least two similar images may be displayed in the thumbnail 905, and identifiers used for indicating that the at least two similar images are included (or referred to as similar image identifiers) may be displayed in the thumbnail 905. A specific display form of the similar images is not limited in this embodiment of this application.

When the terminal device receives a trigger operation of the user on the thumbnail 905, the terminal device may display an interface shown in FIG. 9E. The interface may include one or more of the following: any one (such as a similar image 910) of at least two zoomed-in similar images, at least two zoomed-out similar images, and similar image identifiers. The similar image identifiers may be disposed in an upper-right corner of the interface shown in FIG. 9E.

The at least two zoomed-out similar images may be displayed in a rectangular box shown in FIG. 9E, and a thumbnail corresponding to the similar image 910, for example, a thumbnail located in the middle of the rectangular box, may be selected by default in the rectangular box.

In a possible implementation, when the terminal device receives an operation of selecting a thumbnail corresponding to another similar image in the rectangular box by the user, the terminal device may zoom in a selected similar image 911 in the interface shown in FIG. 9E.

Further, in a case that the similar image 911 is selected, when the terminal device receives a tap operation of the user on the control 906, the terminal device may display an interface shown in FIG. 9F. The interface may include: a window 907. The window 907 may include: functional controls such as a control 908 configured to set any similar image as a cover, and a control 909 configured to remove any similar image.

In response to a tap operation on the control 908, the terminal device may set the similar image 911 as a cover, and display the similar image 911 in the thumbnail 905 as shown in FIG. 9D. Therefore, the terminal device can implement quick locating of a material by setting a cover for a similar item.

In response to a tap operation on the control 909, the terminal device may remove the similar image 911, and the removed similar image may be independently displayed in the all-materials interface. For example, a thumbnail corresponding to the similar image 911 is displayed in the interface shown in FIG. 9D. In this scenario, there may be no similar image 911 in the similar item corresponding to the thumbnail 905, which is not shown in FIG. 9A to FIG. 9F.

Based on this, the terminal device may implement detection of the similar materials in the multimedia application, and may also implement processing such as merging and deletion of the similar materials, thereby improving user experience in use of a similarity detection function and facilitating management of materials in the multimedia application.

An embodiment of this application provides a display method, so that a multimedia application in a terminal device can display thumbnails and a single material corresponding to any one of the thumbnails in a split-screen manner, facilitating a user to view materials.

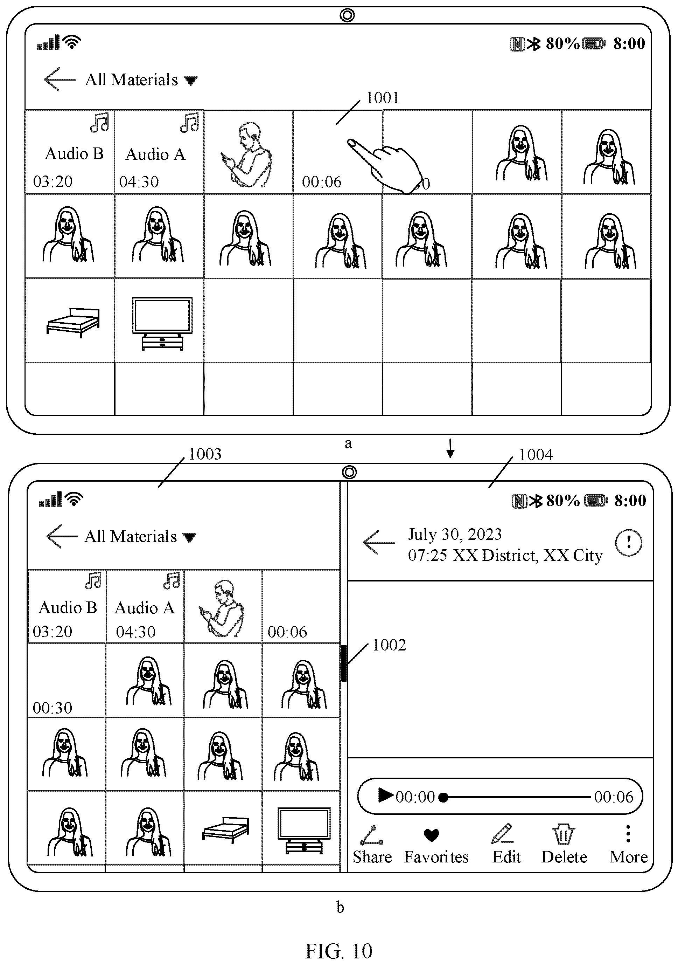

For example, FIG. 10 is a schematic diagram of an interface for split-screen display in a multimedia application according to an embodiment of this application. An example in which the terminal device is a tablet computer is used for description, and this example does not constitute a limitation on this embodiment of this application.

The terminal device displays an interface shown in a in FIG. 10. Content displayed in the interface may be similar to the content displayed in the interface shown in FIG. 7B. Details are not described herein again.

When the terminal device receives a tap operation of the user on a thumbnail 1001, the terminal device may display the interface shown in FIG. 7B. The interface may include: two windows and a control 1002 located between the two windows. A thumbnail corresponding to all materials may be displayed in a left window 1003, and video content corresponding to the thumbnail 1001 may be displayed in a right window 1004, implementing split-screen display with left and right windows. The user may control display sizes of the left and right windows by using the control 1002, or may close the right window 1004 by swiping the control 1002 to a rightmost region of the display screen.

Alternatively, when the terminal device receives an operation of dragging the thumbnail 1001 to the right side of the display screen by the user (the user lets go in this case), the terminal device may display the interface shown in FIG. 7B. During the dragging of the thumbnail 1001 to the right side of the display screen, content in the interface shown in a in FIG. 10 displayed by the terminal device may be gradually zoomed out to the left window 1003 shown in b in FIG. 10.

In a possible implementation, when the terminal device receives a tap operation of the user on the thumbnail 1001 or receives an operation of dragging the thumbnail 1001 to the right side of the display screen by the user, the terminal device may determine whether resolution of the display screen satisfies preset resolution, and when determining that the resolution of the display screen satisfies the preset resolution, perform split-screen display as shown in b in FIG. 10. The preset resolution may be understood as display screen resolution allowing implementation of split-screen display. For example, the preset resolution may be display-screen resolution of a foldable-screen device, display-screen resolution of a tablet computer, or the like. A specific resolution value is not limited in this embodiment of this application.

It may be understood that the terminal device may alternatively implement split-screen display in the all-materials interface shown in FIG. 4B by using the foregoing tap operation or dragging operation. The interface for implementing split-screen display is not limited in this embodiment of this application.

Based on this, the terminal device may implement split-screen display of all materials and any one of all the materials, facilitating the user to view differences between similar materials.

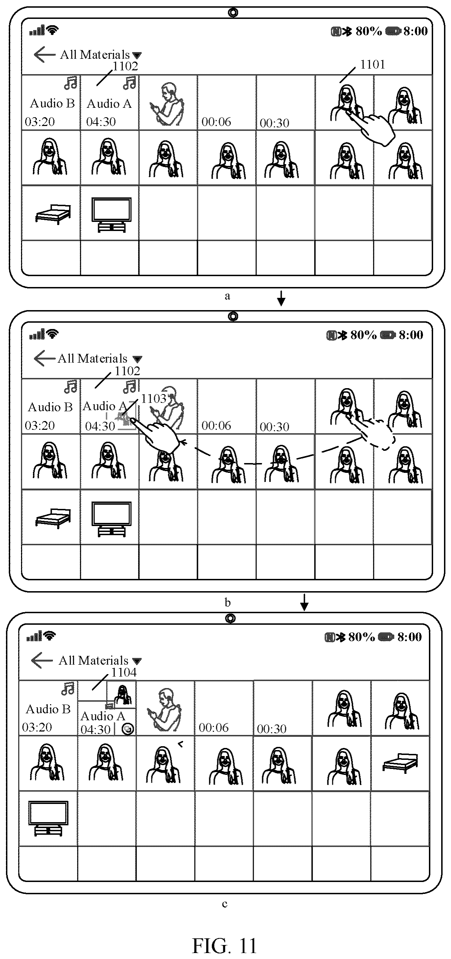

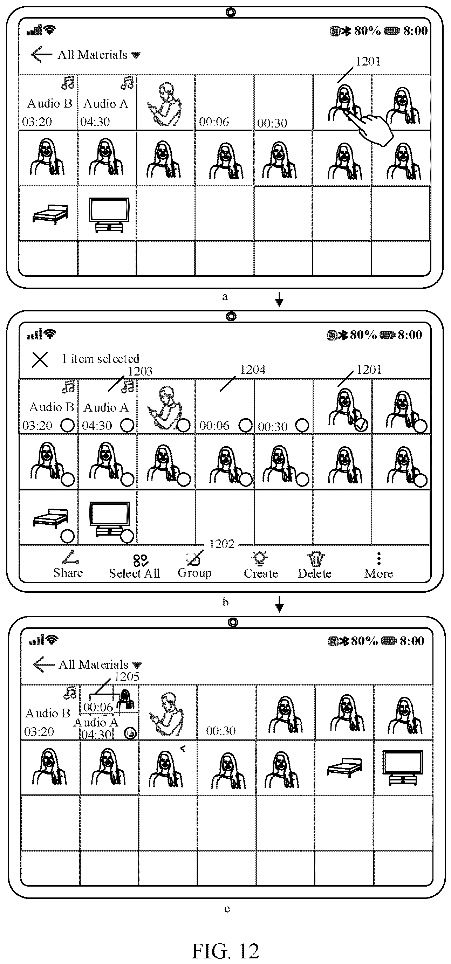

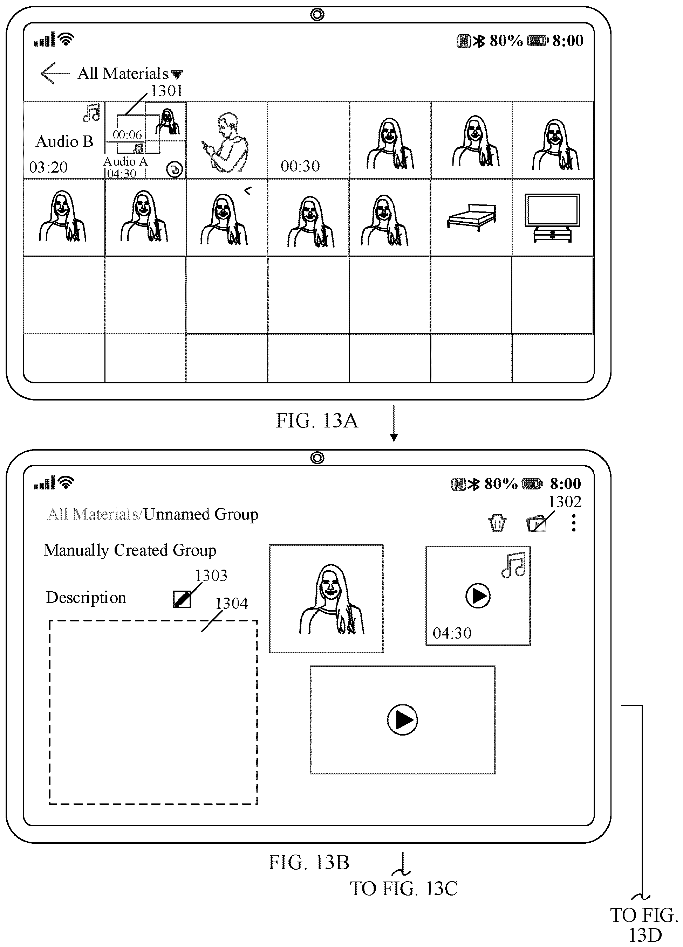

An embodiment of this application provides a display method, so that a multimedia application in a terminal device can implement integration of images, videos, and audios into material groups (refer to embodiments corresponding to FIG. 11 and FIG. 12) and implement processing on the material groups (refer to an embodiment corresponding to FIG. 13A to FIG. 13D).

The terminal device may implement integration of the material groups in a dragging manner (refer to the embodiment corresponding to FIG. 11), and/or the terminal device may alternatively implement integration of the material groups in a manner of triggering a grouping control (refer to the embodiment corresponding to FIG. 12).

For example, FIG. 11 is a schematic diagram of an interface for integrating material groups according to an embodiment of this application.

The terminal device displays an interface shown in a in FIG. 11. When the terminal device receives an operation of dragging, by the user, a thumbnail 1101 to a region in which a thumbnail 1102 is located, the terminal device may sequentially display an interface shown in b in FIG. 11 and an interface shown in c in FIG. 11.

When the user drags the thumbnail 1101 to the region in which the thumbnail 1102 is located, the terminal device may display an identifier 1103 corresponding to the thumbnail 1101. The identifier 1103 is used for indicating a position to which the thumbnail 1101 moves, and the identifier 1103 may be translucent, to prevent viewing of other content in the interface by an application user.

Compared with an interface shown in a in FIG. 11, a thumbnail 1104 may be displayed in an interface shown in c in FIG. 11. A material group identifier (an identifier displayed in a lower-right corner of the thumbnail 1104) may be displayed in the thumbnail 1104, a zoomed-out thumbnail 1101 and a zoomed-out thumbnail 1102 may be displayed in a cascading manner in the thumbnail 1104, and a material group corresponding to the thumbnail 1104 may include an image corresponding to the thumbnail 1101 and an audio A corresponding to the thumbnail 1102.

In a possible implementation, the terminal device may alternatively add, based on an operation of dragging, by the user, another thumbnail to a region in which the thumbnail 1104 is located, a material corresponding to the another thumbnail to the material group corresponding to the thumbnail 1104, and as content of the material group increases, content of thumbnails that are displayed in a cascading manner in the thumbnail 1104 increases.

It may be understood that the content displayed in the thumbnail 1104 and a specific form of the material group identifier are not specifically limited in this embodiment of this application.

For example, FIG. 12 is a schematic diagram of another interface for integrating material groups according to an embodiment of this application.

The terminal device displays an interface shown in a in FIG. 12. When the terminal device receives a long-press operation of the user on a thumbnail 1201 (the user lets go in this case), the terminal device may display an interface shown in b in FIG. 12.

The interface shown in b in FIG. 12 may include: a control (or referred to as a grouping control) 1202 configured to indicate integrating at least two materials into a material group. The thumbnail 1201 is selected by default, and a control configured to select a material may be displayed around any thumbnail.

When the user selects, in the interface shown in b in FIG. 12, an image corresponding to the thumbnail 1201, an audio corresponding to a thumbnail 1203, and a video corresponding to a thumbnail 1204, in response to a tap operation on the control 1202, the terminal device may integrate the foregoing three selected materials into one material group, to display an interface shown in c in FIG. 12.

Compared with an interface shown in a in FIG. 12, a thumbnail 1205 may be displayed in an interface shown in c in FIG. 12. A material group identifier may be displayed in a thumbnail 1205, a zoomed-out thumbnail 1201, a zoomed-out thumbnail 1203, and a zoomed-out thumbnail 1204 may be displayed in a cascading manner in the thumbnail 1205, and a material group corresponding to the thumbnail 1205 may include: an image corresponding to the thumbnail 1201, an audio A corresponding to the thumbnail 1203, and a video corresponding to the thumbnail 1204. It may be understood that the terminal device may alternatively implement integration of material groups in the all-materials interface shown in FIG. 4B based on the embodiments corresponding to FIG. 11 and FIG. 12. A specific interface for implementing integration of material groups is not limited in this embodiment of this application.

Based on this, the terminal device may integrate at least two materials into a material group based on the embodiments corresponding to FIG. 11 and FIG. 12, facilitating the user to view related materials in the material group. The solution described in the embodiment corresponding to FIG. 11 facilitates the user to add a new material to the material group at any time. The solution described in the embodiment corresponding to FIG. 12 facilitates the user to integrate a plurality of materials into one material group at a time.

Based on the embodiment corresponding to FIG. 11 or FIG. 12, the terminal device may alternatively implement functions such as renaming the material group, previewing the at least two materials in the material group at the same time, and adding a text description of the material group. For example, FIG. 13A to FIG. 13D are a schematic diagram of an interface for previewing material groups according to an embodiment of this application.

The terminal device displays an interface shown in FIG. 13A. When the terminal device receives a tap operation of the user on a thumbnail 1301, the terminal device may display an interface shown in FIG. 13B.

The interface shown in FIG. 13B may be a grouping interface. The interface may include one or more of the following: images in a material group, audios in the material group, videos in the material group, a control 1303 configured to add a text description to the material group, a control configured to delete any material, a control 1302 configured to perform creation by using materials in the material group, and the like. Content displayed in the interface shown in FIG. 13B is not specifically limited in this embodiment of this application.

It may be understood that the terminal device may support the user to add a grouping description, add a to-do item, or perform renaming and grouping on the left side of the interface shown in FIG. 13B. In addition, the terminal device may also support the user to play back an audio, play back a video, mute a plurality of videos, trigger subtitle display in a video, and the like on the right side of the interface shown in FIG. 13B.

When the terminal device receives a tap operation of the user on the control 1303, the terminal device may display a text box in a lower region of the control 1303 (such as a region shown by a dashed box 1304). Functions such as entering information, creating a to-do item, and marking the to-do item as Completed may be implemented in the text box.

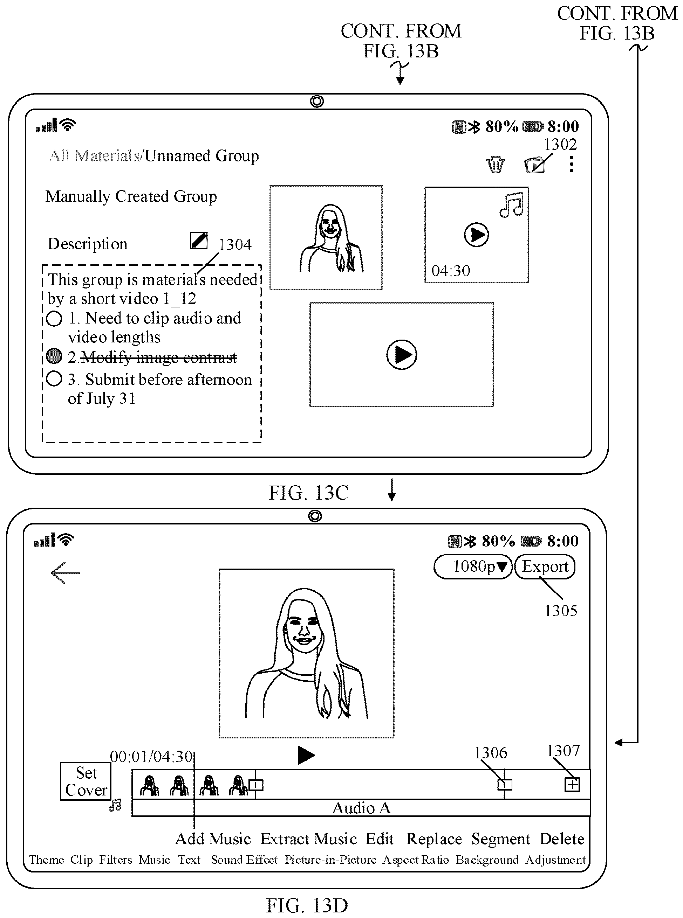

For example, in response to the user's operations of entering text information "This group is materials needed by a short video 1_12" in a text box, creating three to-do items "1. Need to clip audio and video lengths, 2. Modify image contrast, and 3. Submit before afternoon of July 31", and marking the second to-do item as Completed, the terminal device displays an interface shown in FIG. 13C.

When the terminal device receives a tap operation of the user on the control 1302, the terminal device may automatically clip all the materials in the material group, for example, combine pictures or videos in the material group into a target video, and set a dubbing of the target video to an audio A, thereby displaying an interface shown in FIG. 13D. The interface may be understood as a creation interface for editing the material group. The tap operation of the user on the control 1302 may be an operation on the control 1302 in the interface shown in FIG. 13B, or may be an operation on the control 1302 in the interface shown in FIG. 13C.

In this scenario, the terminal device may sort the material groups and add description content of the material groups, and may also edit, in the interface shown in FIG. 13D, the materials in the material group into a video, to implement video creation.

In the interface shown in FIG. 13D, the interface may include one or more of the following: a control 1307 configured to add a material to a video, a control 1305 configured to export the video (displayed as a word "Export"), a control configured to set resolution of the video (displayed as a word "1080P"), a control configured to segment the video (displayed as a word "Segment"), a control 1306 configured to set a transition for the video, and the like.

As shown in FIG. 13D, the terminal device further supports the user to clip a video, set a filter, set music, add text, set a special effect, set picture-in-picture, set an aspect ratio, set background, make other adjustments to the video, and the like.

It may be understood that, compared with that the user enters a creation function from a creation control in the interface shown in FIG. 4B and inserts a needed material into the creation function, entering the creation function by using the control 1302 in the grouping interface facilitates the user to create a video at any time according to a sorting status of the materials and/or a text description for a material group, thereby improving convenience and flexibility of the user in using the creation function.

Based on the embodiment corresponding to FIG. 13A to FIG. 13D, the terminal device may support the user to add a new material to a creation interface and integrate materials of a generated video into a material group.

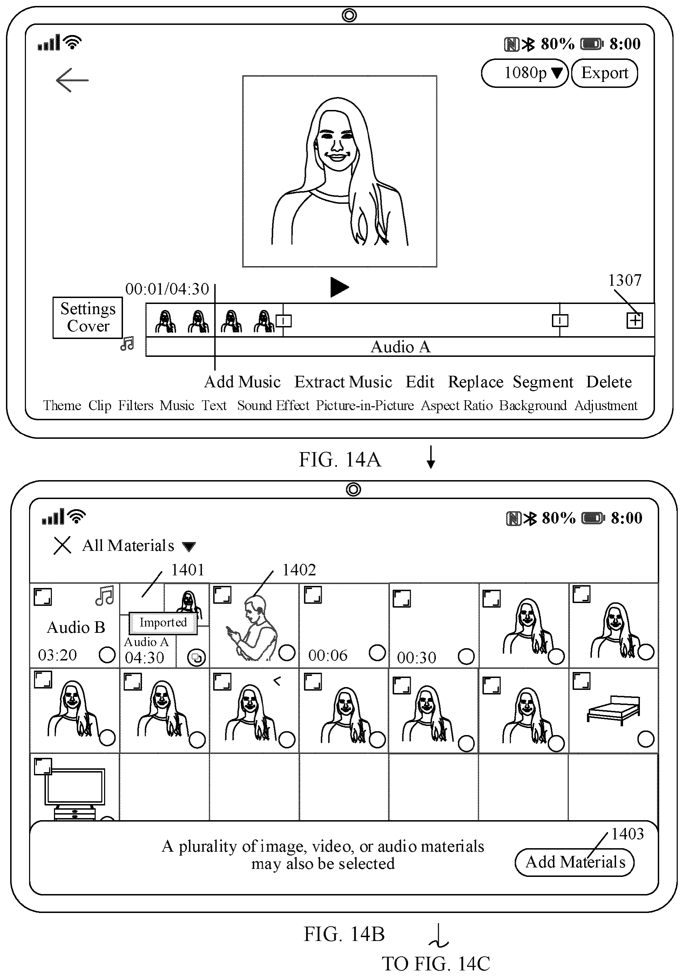

For example, FIG. 14A to FIG. 14D are a schematic diagram of an interface for adding materials according to an embodiment of this application.

The terminal device displays an interface shown in FIG. 14A. The interface is the same as the interface shown in FIG. 13D. Details are not described herein again.

When the terminal device receives a tap operation of the user on the control 1307, the terminal device displays an interface shown in FIG. 14B. The interface may include: a thumbnail 1401 and a thumbnail 1402. A word "Imported" may be displayed in the thumbnail 1401, indicating that a material corresponding to the thumbnail 1401 has been imported into the video.

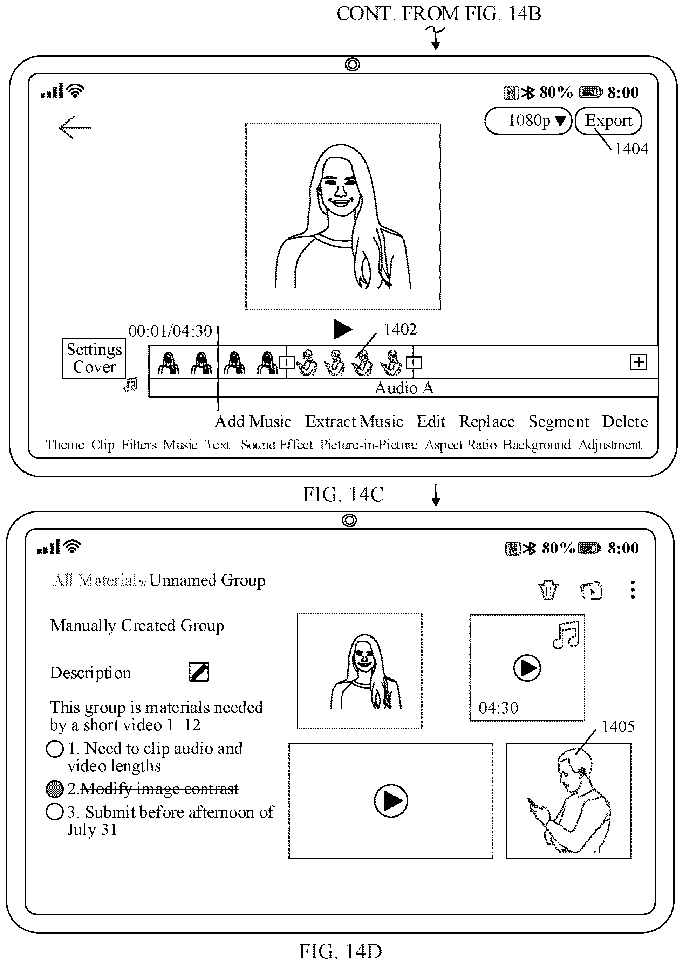

In a case that the terminal device receives that the user selects the thumbnail 1402, when the terminal device receives a tap operation of the user on a control 1403 configured to add materials, the terminal device displays an interface shown in FIG. 14C. The interface may include: a zoomed-out thumbnail 1402. It may be understood that the terminal device may automatically add an image corresponding to the thumbnail 1402 to the video, to generate a new video.

When the terminal device receives a tap operation of the user on a control 1404, the terminal device may save the newly generated video to the device, and add the image corresponding to the thumbnail 1402 to an original group by default. That is, when the terminal device receives an operation of opening a group by the user, the terminal device may display an interface shown in FIG. 14D. An image 1405 may be displayed in the interface. The image 1405 is content of the image corresponding to the thumbnail 1402.

It may be understood that, when not receiving an operation of the user on the control 1404, the terminal device exports video content, and the terminal device may not add the image corresponding to the thumbnail 1402 to the original group.

It may be understood that, during creation of a video, the user may add a new available material to the video. Therefore, when detecting that the user exports the video, the terminal device may set materials in the video as a group or add a new material to an original group, facilitating the user to view material content in the video or continue to use the materials in the group to create a new video.

An embodiment of this application provides a display method, so that a terminal device can implement a pin-to-top function for any material or material group in a multimedia application.

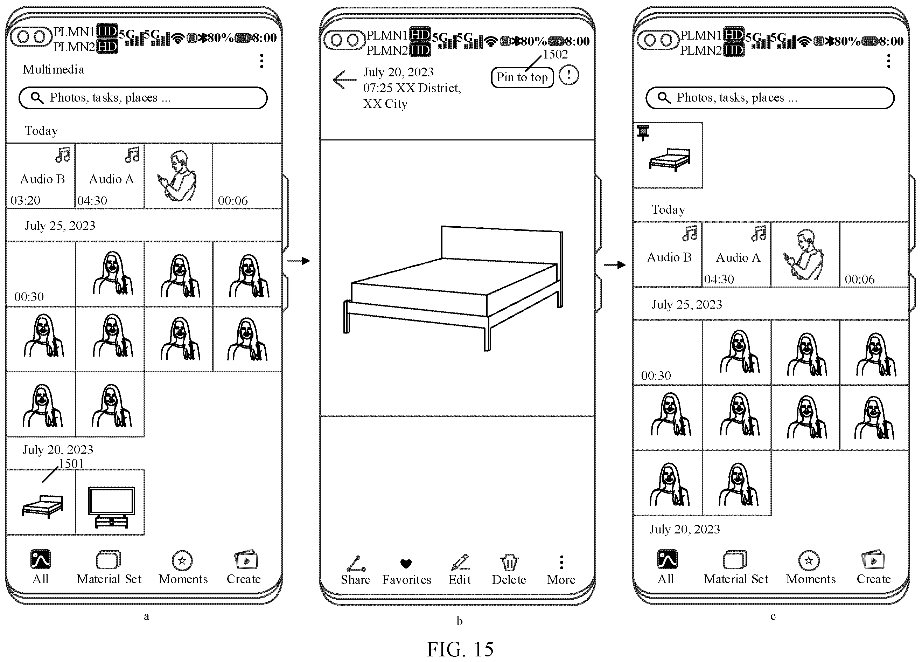

For example, FIG. 15 is a schematic diagram of an interface for pinning a material to top according to an embodiment of this application.

The terminal device displays an interface shown in a in FIG. 15. Content displayed in the interface may be the same as the content displayed in the interface shown in b in FIG. 5. Details are not described herein again. When the terminal device receives a tap operation of the user on a thumbnail 1501, the terminal device may display an interface shown in b in FIG. 15. A control 1502 configured to pin a material to top may be displayed in an upper-right corner of the interface. When the terminal device receives a tap operation of the user on the control 1502, the terminal device may pin an image corresponding to the thumbnail 1501 to top. For example, when the terminal device receives an operation of exiting a current interface by the user (or receiving that the user opens the all-materials interface), the terminal device displays an interface shown in c in FIG. 15. The thumbnail 1501 may be displayed in the interface in a pin-to-top manner. A pin-to-top identifier may be displayed in the thumbnail 1501.

It may be understood that the terminal device may pin an image to top and may also pin a video, an audio, and a material group to top based on the embodiment corresponding to FIG. 15. When there are a plurality of pinned-to-top materials in the multimedia application, the plurality of pinned-to-top materials may be sorted in reverse chronological order. For example, a material recently pinned to top is placed in front, enabling the user to directly pay attention to the pinned-to-top material when viewing all materials.

In a possible implementation, the pinned-to-top material may alternatively be displayed in a pin-to-top manner in an album. Since the pinned-to-top material may carry a pin-to-top tag, in response to an operation of opening any material set by the user, the terminal device may prioritize display of a material that is in the material set and carries a pin-to-top tag.

Based on this, the terminal device may pin a material or a material group to top in the multimedia application, so that the user can quickly find a needed material, thereby improving user experience in use of the multimedia application.

It may be understood that the interface provided in embodiments of this application is only an example, and does not constitute a limitation on embodiments of this application.

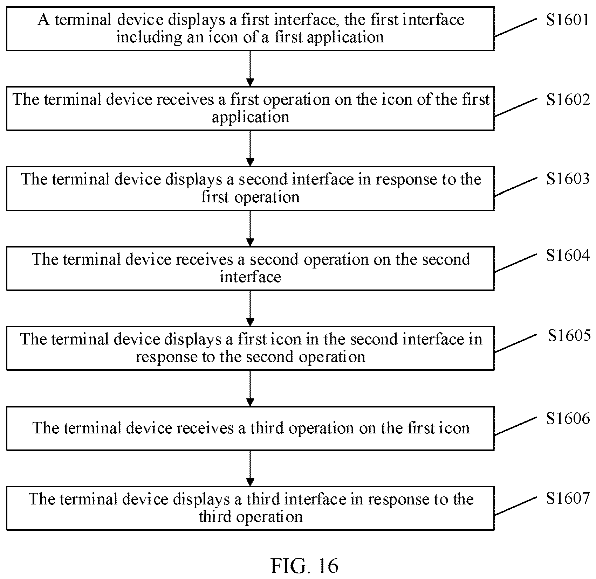

On the basis of the embodiments corresponding to FIG. 5 to FIG. 15, FIG. 16 is a schematic flowchart of display according to an embodiment of this application. As shown in FIG. 16, the display method may include the following steps:
S 160 1: A terminal device displays a first interface, the first interface including an icon of a first application.

The first interface may be the interface shown in FIG. 4A, the first application may be a multimedia application, and the icon of the first application may be an icon 401.

S1602: The terminal device receives a first operation on the icon of the first application.

The first operation may be, for example, a tap operation on the icon 401.

S1603: The terminal device displays a second interface in response to the first operation, the second interface including: an icon of a first material and an icon of a second material, the first material being an audio, and the second material being an image, an audio, or a video.

The second interface may be the interface shown in FIG. 4B, the interface shown in a in FIG. 11, or the interface shown in a (or b) in FIG. 12. When the second interface is the interface shown in b in FIG. 12, the icon of the first material may be a thumbnail 1203, and the icon of the second material may be a thumbnail 1201 or a thumbnail 1204.

S1604: The terminal device receives a second operation on the second interface.

The second operation is an operation of setting, by the user, the first material and the second material as a group, for example, dragging to form a group as described in the embodiment corresponding to FIG. 11, or selecting materials to form a group as described in the embodiment corresponding to FIG. 12.

S1605: The terminal device displays a first icon in the second interface in response to the second operation.

The first icon may be the thumbnail 1205 shown in c in FIG. 12 or the thumbnail 1301 shown in FIG. 13A.

S1606: The terminal device receives a third operation on the first icon.

The third operation is a tap operation on the thumbnail 1301.

S1607: The terminal device displays a third interface in response to the third operation, the third interface including: the first material and the second material.

The third interface is the interface shown in FIG. 13B.

Based on this, the user can preview images, videos, and audios in a unified manner in the first application, thereby facilitating the user to quickly locate a needed material from the first application and also facilitating the user to sort and preview the materials in batches.

In a possible implementation, the third interface further includes a first control, and the method further includes: displaying, by the terminal device, a fourth interface in response to an operation on the first control, the fourth interface including a first video, the fourth interface being an interface for editing a video, and the first video being obtained by the terminal device by clipping the first material and the second material.

The first control is the control 1302 shown in FIG. 13B (or FIG. 13C). The fourth interface may be the interface shown in FIG. 13D.

In a possible implementation, the fourth interface further includes one or more of the following: a second control configured to add a material to the first video, a third control configured to export a video, a control configured to set resolution of the first video, a control configured to segment the first video, and a control configured to set a transition for the first video.

In the interface shown in FIG. 13D, the second control is the control 1307, the third control may be the control 1305, the control configured to set resolution of a first video may be the control displayed as the word "1080p", the control configured to segment the first video may be the control displayed as the word "Segment", and the control configured to set a transition for the first video may be the control 1306.

In a possible implementation, after the displaying, by the terminal device, a fourth interface, the method further includes: displaying, by the terminal device, a fifth interface in response to an operation on the second control, the fifth interface including: the first icon and an icon of a third material, the third material being an image, an audio, or a video; displaying, by the terminal device, the third material in the fourth interface in response to an operation of adding the third material to the first video; exporting, by the terminal device, a second video in response to an operation of a user on a third control, the second video including the first material, the second material, and the third material; and displaying, by the terminal device, the third material in the third interface in response to an operation of opening the third interface by the user.

The fifth interface may be the interface shown in FIG. 14B, the first icon may be the thumbnail 1401, and the icon of the third material may be the thumbnail 1402.

In the interface shown in FIG. 14C, the interface may include the third material. In the interface shown in FIG. 14D, the interface may include the third material, for example, a material indicated by 1405.

In a possible implementation, the third interface further includes a control configured to add descriptions, and the method further includes: displaying, by the terminal device, a text box in the third interface in response to an operation on the control configured to add descriptions; and displaying, by the terminal device, first information in the text box in response to an operation of inputting the first information in the text box, the first information including: text information, and/or a to-do item.

A control configured to add descriptions may be the control 1303 shown in FIG. 13B, the text box may be the text box displayed in the region 1304, and the first information may be the content displayed in the dashed box 1304 in the interface shown in FIG. 13C.

In a possible implementation, the second interface further includes: a fourth control configured to view a material set, and the method further includes: displaying, by the terminal device, a sixth interface in response to an operation on the fourth control, the sixth interface including: a fifth control configured to view more functions; displaying, by the terminal device in response to an operation on the fifth control, a sixth control configured to detect a similar material in the sixth interface; displaying, by the terminal device, a second icon in the sixth interface in response to an operation on the sixth control; and displaying, by the terminal device, a seventh interface in response to an operation on the second icon, the seventh interface including: an icon of a third material and an icon of a fourth material, the third material and the fourth material being materials whose similarity meets a preset condition.

The fourth control may be the control 404 in the interface shown in FIG. 4B. The sixth interface may be the interface shown in a in FIG. 8 (or the interface shown in FIG. 4C). The fifth control may be the More Functions control displayed in the upper-right corner of a in FIG. 8 (the More Functions control may be displayed as "+"). The sixth control may be the control 802. The second icon may be the thumbnail 803 shown in b in FIG. 8. The seventh interface may be the interface shown in FIG. 9A (or FIG. 9B).

In a possible implementation, the method further includes: displaying, by the terminal device in response to an operation of selecting the third material and the fourth material, a seventh control configured to merge similar materials in a seventh interface; and displaying, by the terminal device, a third icon in the second interface in response to an operation on the seventh control, the third icon displaying one or more of the following: the icon of the third material, the icon of the fourth material, and a third identifier, the third identifier being used for indicating that the third icon corresponds to at least two similar materials.

The seventh control may be the control 904 shown in FIG. 9B. "Displaying, by the terminal device, a third icon in the second interface" may be understood as displaying, by the terminal device, the thumbnail 905 in the interface shown in FIG. 9D. The third identifier may be a similar image identifier in the thumbnail 905.

In a possible implementation, when the seventh interface further includes: a fifth material, and the third material, the fourth material, and the fifth material are materials whose similarity meets the preset condition, after the in response to an operation on the seventh control, the method further includes: deleting, by the terminal device, the fifth material.

The fifth material may be a material that is not selected in the interface shown in FIG. 9B, such as a material corresponding to the thumbnail 900.

In a possible implementation, the method further includes: displaying, by the terminal device, an eighth interface in response to an operation on the third icon, the eighth interface including: a zoomed-out icon of the third material, a zoomed-out icon of the fourth material, and an eighth control configured to view more functions; displaying, by the terminal device, a first window in the eighth interface in response to an operation on the eighth control, the first window including one or more of the following: a ninth control configured to set a cover, and a tenth control configured to remove a similar image; and setting, by the terminal device, the icon of the third material as a cover in response to an operation on the ninth control when the icon of the third material is in a selected state, the third icon including the icon of the third material; or removing, by the terminal device, the third material from the similar image in response to an operation on the tenth control when the icon of the third material is in the selected state, and after the in response to an operation on the tenth control, the eighth interface not including the zoomed-out icon of the third material.

The eighth interface may be the interface shown in FIG. 9E. The eighth control may be the control 906. The first window may be the window 907 shown in FIG. 9F, the ninth control may be the control 908, and the tenth control may be the control 909.

In a possible implementation, when the third material is an audio and the fourth material is a video, the third material and the fourth material are materials whose similarity meets the preset condition, including: a similarity between audios in the third material and the fourth material being greater than a first threshold; and/or when the third material is an image and the fourth material is a video, the third material and the fourth material are materials whose similarity meets the preset condition, including: a ratio of a quantity of first images to a quantity of all images in the fourth material being greater than a second threshold, the first images being images in the fourth material whose similarities to the third material are greater than a third threshold.

In a possible implementation, the sixth interface further includes a fourth icon, and the method further includes: displaying, by the terminal device, a ninth interface in response to an operation on the fourth icon, the ninth interface including: an icon of the first material, and when the second material is an audio, the ninth interface further including the icon of the second material.

The fourth icon may be the thumbnail 405 shown in FIG. 4C. The ninth interface may be the interface shown in FIG. 4D.

In a possible implementation, the method further includes: displaying, by the terminal device, an icon of the sixth material in the second interface in response to an operation of downloading the sixth material; and/or, displaying, by the terminal device, an icon of a seventh material in the second interface in response to an operation of obtaining the seventh material by recording, both the sixth material and the seventh material being audios.

In a possible implementation, the first material carries at least one first tag, the first tag being used for indicating a type of an audio, and the type of the audio including one or more of the following: recordings, conversations, music, sound effects, and voiceprints, and the method further includes: displaying, by the terminal device, a tenth interface in response to an operation of searching for the first tag in the second interface by the user, the tenth interface including the icon of the first material and the first tag.

The tenth interface may be the interface shown in FIG. 7D.

In a possible implementation, the second operation includes: an operation of dragging the icon of the first material to the icon of the second material, or an operation of dragging the icon of the second material to the icon of the first material.

In a possible implementation, the receiving, by the terminal device, a second operation on the second interface includes: displaying, by the terminal device, an eleventh interface in response to an operation on the icon of the first material in the second interface, the eleventh interface including: an eleventh control configured to merge at least two materials into a material group, the icon of the first material being in a selected state, and the icon of the second material being not in the selected state; and receiving, by the terminal device, a second operation on the eleventh control when the icon of the second material is selected.

The eleventh interface may be the interface shown in b in FIG. 12, and the eleventh control may be the control 1202.

In a possible implementation, a first identifier is displayed in the icon of the first material, the first identifier being used for indicating that the first material is an audio; and the first icon displays one or more of the following: a zoomed-out icon of the first material, a zoomed-out icon of the second material, and a second identifier, the second identifier being used for indicating that the first icon corresponds to at least two materials.

The first identifier is the audio identifier described in the embodiments of this application, and the second identifier is the material group identifier described in the embodiments of this application. In a possible implementation, the method further includes: displaying, by the terminal device, a twelfth interface in response to an operation on the icon of the first material in the second interface, the twelfth interface including: the first material and a control configured to pin a material to top; and displaying, by the terminal device, the first material in the second interface in a pin-to-top manner in response to an operation on the control configured to specify a material.

The twelfth interface may be the interface shown in a in FIG. 15, and the control configured to pin a material to top is the control 1502.

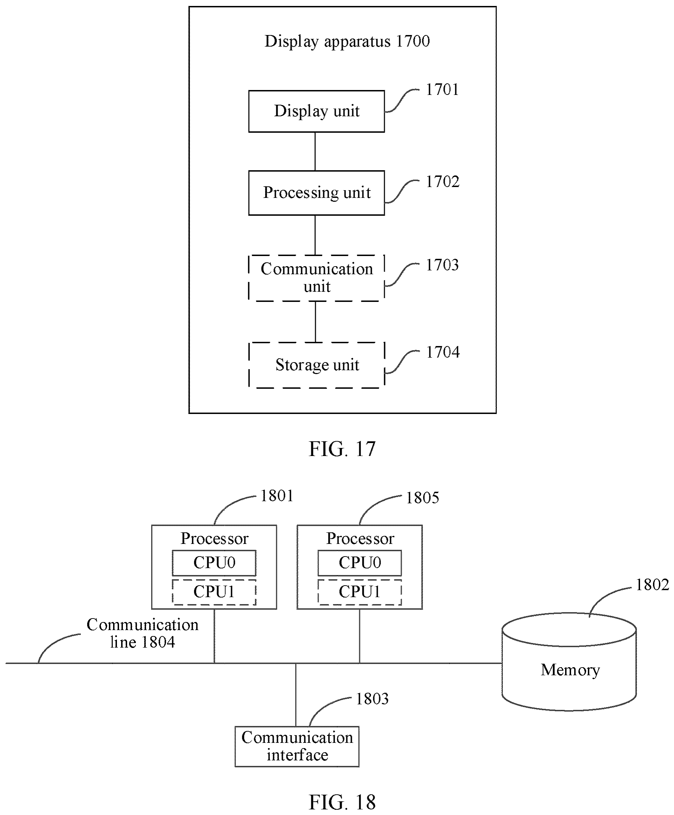

The method provided in the embodiments of this application is described above with reference to FIG. 4A to FIG. 4D to FIG. 16, and an apparatus provided in an embodiment of this application for performing the foregoing method is described below. As shown in FIG. 17, FIG. 17 is a schematic structural diagram of a display apparatus according to an embodiment of this application. The display apparatus may be a terminal device in the embodiments of this application or may be a chip or a chip system in the terminal device.

As shown in FIG. 17, the display apparatus 1700 may be used in a communication device, a circuit, a hardware component, or a chip, and the display apparatus 1700 includes: a display unit 1701 and a processing unit 1702. The display unit 1701 is configured to support display steps performed in a display method. The processing unit 1702 is configured to support the display apparatus 1700 to perform information processing steps.

In a possible implementation, the display apparatus 1700 may further include a communication unit 1703, and the communication unit 1703 is configured to support the display apparatus 1700 to perform steps such as receiving or sending a message.

The display apparatuses described in the embodiments of this application may all include the units described in the embodiment corresponding to FIG. 17.

Specifically, the processing unit 1702 may be integrated with the display unit 1701, and the processing unit 1702 and the display unit 1701 may communicate with each other.

In a possible implementation, the display apparatus 1700 may further include: a storage unit 1704. The storage unit 1704 may include one or more memories, and the memory may be one or more devices or a component that is in a circuit and configured to store a program or data.

The storage unit 1704 may exist independently, and is connected to the processing unit 1702 through a communication bus. The storage unit 1704 may alternatively be integrated with the processing unit 1702.

In an example in which the display apparatus 1700 may be the chip or chip system of the terminal device in the embodiments of this application, the storage unit 1704 may store computer-executable instructions of the method of the terminal device, so that the processing unit 1702 performs the method of the terminal device in the foregoing embodiments. The storage unit 1704 may be a register, a cache, a random access memory (random access memory, RAM), or the like, and the storage unit 1704 may be integrated with the processing unit 1702. The storage unit 1704 may be a read-only memory (read-only memory, ROM) or another type of static storage device that may store static information and instructions, and the storage unit 1704 may be independent of the processing unit 1702.

In a possible implementation, the display apparatus 1700 may further include: a communication unit 1703. The communication unit 1703 is configured to the display apparatus 1700 to interact with another device. Exemplarily, when the display apparatus 1700 is a terminal device, the communication unit 1703 may be a communication interface or an interface circuit. When the display apparatus 1700 is a chip or chip system in a terminal device, the communication unit 1703 may be a communication interface. For example, the communication interface may be an input/output interface, a pin, a circuit, or the like.

The apparatus in this embodiment may be accordingly configured to perform the steps in the foregoing method embodiments, implementation principles and technical effects of the apparatus and the method embodiments are similar, and details are not described herein again.

FIG. 18 is a schematic diagram of a hardware structure of another terminal device according to an embodiment of this application.

The terminal device may include a processor 1801, a communication line 1804, and at least one communication interface (for example, a communication interface 1803 is used as an example for description in FIG. 18).

The processor 1801 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 1804 may include a circuit configured to transmit information between the foregoing components.

The communication interface 1803 uses any apparatus of a transceiver type to communicate with another device or a communication network such as an Ethernet, a wireless local area network (wireless local area networks, WLAN), and the like.

Possibly, the terminal device may further include a memory 1802.

The memory 1802 may be a read-only memory (read-only memory, ROM), another type of static storage device that may store static information and instructions, a random access memory (random access memory, RAM), or another type of dynamic storage device that may store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but is not limited thereto. The memory may exist independently, and connect to the processor by using the communication line 1804. The memory may alternatively be integrated with the processor.

The memory 1802 is configured to store computer-executable instructions for performing the solutions of this application, and is controlled and executed by the processor 1801. The processor 1801 is configured to execute the computer-executable instructions stored in the memory 1802 to implement the method provided in the embodiments of this application.

Possibly, the computer-executable instructions in this embodiment of this application may also be referred to as application code. This is not specifically limited in this embodiment of this application.

During specific implementation, in an embodiment, the processor 1801 may include one or more CPUs, for example, a CPU0 and a CPU1 in FIG. 18.

During specific implementation, in an embodiment, the terminal device may include a plurality of processors, for example, a processor 1801 and a processor 1805 in FIG. 18. Each of these processors may be a single-core (single-CPU) processor, or may be a multi-core (multi-CPU) processor. The processor herein may refer to one or more devices, circuits, and/or processing cores configured to process data (for example, computer program instructions).

In the foregoing embodiment, the instructions stored in the memory and executed by the processor may be implemented in a form of a computer program product. The computer program product may be pre-written into the memory or may be downloaded and installed in the memory in a form of software.

The computer program product includes one or more computer instructions. When the computer program instructions are loaded and executed on the computer, the procedure or functions according to the embodiments of this application are wholly or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be stored by the computer or a data storage device, such as a server or a data center, including one or more usable media. The usable medium may include a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like.

An embodiment of the disclosure further provides a computer-readable storage medium. The method described in the foregoing embodiments may be wholly or partially implemented by software, hardware, firmware, or any combination thereof. The computer-readable medium may include a computer storage medium and a communication medium, and may further include any medium that can transmit a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc. The magnetic disk generally reproduces data in a magnetic manner, while the optical disc reproduces data optically by using laser.

A combination of the foregoing should also be included in the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention Therefore, the protection scope of the present invention shall be subject to the protection scope of the claims. It should be noted that all the user information (including, but not limited to, user equipment information, user personal information, and the like) and data (including, but not limited to, data for analysis, stored data, displayed data, and the like) involved in this application are information and data authorized by the user or fully authorized by each party. The collection, use, and processing of relevant data need to comply with relevant laws and regulations, and corresponding operation portals are provided for the user to choose to authorize or refuse.

## Claims

1. A display method, wherein the method comprises:
displaying, by a terminal device, a first interface, the first interface comprising an icon of a first application;
receiving, by the terminal device, a first operation on the icon of the first application;
displaying, by the terminal device, a second interface in response to the first operation, the second interface comprising: an icon of a first material and an icon of a second material, the first material being an audio, and the second material being an image, an audio, or a video;
receiving, by the terminal device, a second operation on the second interface;
displaying, by the terminal device, a first icon in the second interface in response to the second operation;
receiving, by the terminal device, a third operation on the first icon; and
displaying, by the terminal device, a third interface in response to the third operation, the third interface comprising: the first material and the second material.

2. The method according to claim 1, wherein the third interface further comprises a first control, and the method further comprises:
displaying, by the terminal device, a fourth interface in response to an operation on the first control, the fourth interface comprising a first video, the fourth interface being an interface for editing a video, and the first video being obtained by the terminal device by clipping the first material and the second material.

3. The method according to claim 2, wherein the fourth interface further comprises one or more of the following: a second control configured to add a material to the first video, a third control configured to export a video, a control configured to set resolution of the first video, a control configured to segment the first video, and a control configured to set a transition for the first video.

4. The method according to claim 3, wherein after the displaying, by the terminal device, a fourth interface, the method further comprises:
displaying, by the terminal device, a fifth interface in response to an operation on the second control, the fifth interface comprising: the first icon and an icon of a third material, the third material being an image, an audio, or a video;
displaying, by the terminal device, the third material in the fourth interface in response to an operation of adding the third material to the first video;
exporting, by the terminal device, a second video in response to an operation of a user on a third control, the second video comprising the first material, the second material, and the third material; and
displaying, by the terminal device, the third material in the third interface in response to an operation of opening the third interface by the user.

5. The method according to any one of claims 1 to 4, wherein the third interface further comprises a control configured to add descriptions, and the method further comprises:
displaying, by the terminal device, a text box in the third interface in response to an operation on the control configured to add descriptions; and
displaying, by the terminal device, first information in the text box in response to an operation of inputting the first information in the text box, the first information comprising: text information, and/or a to-do item.

6. The method according to any one of claims 1 to 5, wherein the second interface further comprises: a fourth control configured to view a material set, and the method further comprises:
displaying, by the terminal device, a sixth interface in response to an operation on the fourth control, the sixth interface comprising: a fifth control configured to view more functions;
displaying, by the terminal device in response to an operation on the fifth control, a sixth control configured to detect a similar material in the sixth interface;
displaying, by the terminal device, a second icon in the sixth interface in response to an operation on the sixth control; and
displaying, by the terminal device, a seventh interface in response to an operation on the second icon, the seventh interface comprising: an icon of a third material and an icon of a fourth material, the third material and the fourth material being materials whose similarity meets a preset condition.

7. The method according to claim 6, wherein the method further comprises:
displaying, by the terminal device in response to an operation of selecting the third material and the fourth material, a seventh control configured to merge similar materials in a seventh interface; and
displaying, by the terminal device, a third icon in the second interface in response to an operation on the seventh control, the third icon displaying one or more of the following: the icon of the third material, the icon of the fourth material, and a third identifier, the third identifier being used for indicating that the third icon corresponds to at least two similar materials.

8. The method according to claim 7, wherein when the seventh interface further comprises: a fifth material, and the third material, the fourth material, and the fifth material are materials whose similarity meets the preset condition, after the in response to an operation on the seventh control, the method further comprises: deleting, by the terminal device, the fifth material.

9. The method according to claim 7 or 8, wherein the method further comprises:
displaying, by the terminal device, an eighth interface in response to an operation on the third icon, the eighth interface comprising: a zoomed-out icon of the third material, a zoomed-out icon of the fourth material, and an eighth control configured to view more functions;
displaying, by the terminal device, a first window in the eighth interface in response to an operation on the eighth control, the first window comprising one or more of the following: a ninth control configured to set a cover, and a tenth control configured to remove a similar image; and
setting, by the terminal device, the icon of the third material as a cover in response to an operation on the ninth control when the icon of the third material is in a selected state, the third icon comprising the icon of the third material;
or removing, by the terminal device, the third material from the similar image in response to an operation on the tenth control when the icon of the third material is in the selected state, and after the in response to an operation on the tenth control, the eighth interface not comprising the zoomed-out icon of the third material.

10. The method according to any one of claims 6 to 9, wherein when the third material is an audio and the fourth material is a video, the third material and the fourth material are materials whose similarity meets the preset condition, comprising: a similarity between audios in the third material and the fourth material being greater than a first threshold;
and/or when the third material is an image and the fourth material is a video, the third material and the fourth material are materials whose similarity meets the preset condition, comprising: a ratio of a quantity of first images to a quantity of all images in the fourth material being greater than a second threshold, the first images being images in the fourth material whose similarities to the third material are greater than a third threshold.

11. The method according to any one of claims 6 to 10, wherein the sixth interface further comprises a fourth icon, and the method further comprises:
displaying, by the terminal device, a ninth interface in response to an operation on the fourth icon, the ninth interface comprising: an icon of the first material, and when the second material is an audio, the ninth interface further comprising the icon of the second material.

12. The method according to any one of claims 1 to 11, wherein the method further comprises:
displaying, by the terminal device, an icon of the sixth material in the second interface in response to an operation of downloading the sixth material;
and/or, displaying, by the terminal device, an icon of a seventh material in the second interface in response to an operation of obtaining the seventh material by recording, both the sixth material and the seventh material being audios.

13. The method according to any one of claims 1 to 12, wherein the first material carries at least one first tag, the first tag being used for indicating a type of an audio, and the type of the audio comprising one or more of the following: recordings, conversations, music, sound effects, and voiceprints, and the method further comprises:
displaying, by the terminal device, a tenth interface in response to an operation of searching for the first tag in the second interface by the user, the tenth interface comprising the icon of the first material and the first tag.

14. The method according to any one of claims 1 to 13, wherein the second operation comprises: an operation of dragging the icon of the first material to the icon of the second material, or an operation of dragging the icon of the second material to the icon of the first material.

15. The method according to any one of claims 1 to 13, wherein the receiving, by the terminal device, a second operation on the second interface comprises:
displaying, by the terminal device, an eleventh interface in response to an operation on the icon of the first material in the second interface, the eleventh interface comprising: an eleventh control configured to merge at least two materials into a material group, the icon of the first material being in a selected state, and the icon of the second material being not in the selected state; and
receiving, by the terminal device, a second operation on the eleventh control when the icon of the second material is selected.

16. The method according to any one of claims 1 to 15, wherein a first identifier is displayed in the icon of the first material, the first identifier being used for indicating that the first material is an audio; and the first icon displays one or more of the following: a zoomed-out icon of the first material, a zoomed-out icon of the second material, and a second identifier, the second identifier being used for indicating that the first icon corresponds to at least two materials.

17. The method according to any one of claims 1 to 16, wherein the method further comprises:
displaying, by the terminal device, a twelfth interface in response to an operation on the icon of the first material in the second interface, the twelfth interface comprising: the first material and a control configured to pin a material to top; and
displaying, by the terminal device, the first material in the second interface in a pin-to-top manner in response to an operation on the control configured to specify a material.

18. A terminal device, comprising a memory, a processor, and a computer program stored in the memory and executable on the processor, wherein when the processor executes the computer program, the terminal device is caused to perform the method according to any one of claims 1 to 17.

19. A computer-readable storage medium, the computer-readable storage medium storing a computer program, wherein when the computer program is executed by a processor, a computer is caused to perform the method according to any one of claims 1 to 17.
